# EUROPEAN PATENT SPECIFICATION

(11) **EP 3 189 884 B1**
(45) Date of publication and mention of the grant of the patent: **01.07.2020**
(21) Application number: 16817646.9
(22) Date of filing: 03.06.2016
(51) Int. Cl.: B01D 53/92, B01D 53/18, B01D 53/50, B01D 53/78, F01N 3/04, B01D 53/14, B01D 53/79, B01J 10/00

(54) **EXHAUST GAS TREATMENT DEVICE**
ABGASVERARBEITUNGSVORRICHTUNG
DISPOSITIF DE TRAITEMENT DE GAZ D'ÉCHAPPEMENT

(30) Priority: 01.07.2015 JP 2015132949
(43) Date of publication of application: 12.07.2017
(73) Proprietor: Fuji Electric Co., Ltd., Kawasaki-shi, Kanagawa 210-9530 (JP)
(72) Inventor: TAKAHASHI, Kuniyuki, Kawasaki-shi, Kanagawa 210-9530 (JP); KOMATSU, Tadashi, Kawasaki-shi, Kanagawa 210-9530 (JP)
(74) Representative: MERH-IP Matias Erny Reichl Hoffmann Patentanwälte PartG mbB
(86) International application number: PCT/JP2016/066698
(87) International publication number: WO 2017/002537

(56) References cited:
- EP-A1- 2 441 512
- AT-B- 394 144
- JP-A- H0 919 623
- JP-A- S5 870 198
- JP-A- S5 949 823
- JP-A- H03 275 124
- JP-A- S57 135 026
- JP-A- 2000 210 533
- JP-A- 2011 067 743
- JP-A- 2015 510 446
- JP-U- S62 183 528
- US-A- 3 233 882
- US-A- 5 676 071

## Description

### BACKGROUND

### 1. TECHNICAL FIELD

The present invention relates to an exhaust gas treating apparatus.

In the conventional art, known exhaust gas treating apparatuses are designed to remove the harmful substances from exhaust gases by passing the exhaust gases through cylindrical absorber towers from the bottom to the top, in which sorbents such as sea water are ejected (see Patent Documents). Within the absorber towers, the exhaust gases move upwards while swirling helically, which allows the exhaust gases to contact the sorbents such as sea water for a longer time.
From document AT-B-394144 an exhaust gas treating devices with a reactor in which the exhaust gas is introduced and a tube in the reactor is provided with a plurality of ejectors to eject liquid to treat the exhaust gas is known.
Furthermore EP2 441 512 A1 shows injectors for the injection of a first fluid into a second fluid streaming in a main channel for the regulation of the flow rate in separate conduit means.
US 3,233,882 shows a cyclonic gas scrubber with means for treating gases and for contacting the gases with liquid to separate particles carried by the gas.

### Prior Art Documents

### Patent Document

Patent Document 1: Japanese Patent Application Publication No. 06-190240
Patent Document 2: Japanese Patent Application Publication No. 08-281055

The exhaust gases may originate from main engines for marine propulsion, auxiliary engines for power generation, boilers for steam supply and the like. These machines do not generate constant amounts of exhaust gases but emit varying amounts of exhaust gases depending on the loads on the engines and the like.

Here, the exhaust gas treating apparatuses are normally designed to eject certain amounts of sorbents that are determined by the maximum amounts of exhaust gases. A case is assumed where the amounts of exhaust gases decrease. If the sorbents are still ejected to treat the maximum amounts of exhaust gases, the sorbents are excessively supplied. In other words, excessive power is required by the pumps to pump up the sorbents. On the other hand, if the flow rate of the sorbents is simply reduced in order to reduce the power required by the pumps, the sorbents are ejected at a lowered ejection pressure. If the ejection pressure falls, problems occur, for example, the droplets increase in size and liquid films are discharged.

### SUMMARY

The invention relates to exhaust gas treating apparatuses as set forth in the claims.

A first aspect of the innovations herein provides an exhaust gas treating apparatus for treating an exhaust gas. The exhaust gas treating apparatus may include a reaction tower, a trunk tube, an exhaust gas inlet tube, a plurality of ejectors, a liquid inlet tube and a volumetric flow rate regulating unit. The exhaust gas may be introduced reaction tower. The trunk tube may be provided within the reaction tower. The trunk tube may extend in a height direction of the reaction tower. A liquid used to treat the exhaust gas may be supplied into the trunk tube. The exhaust gas inlet tube may be connected to the reaction tower to cause the exhaust gas to swirl within the reaction tower. The ejectors may be configured to eject the liquid supplied thereinto from the trunk tube in a direction in which the exhaust gas swirls. The liquid inlet tube may be configured to supply the liquid into the trunk tube. The volumetric flow rate regulating unit may be configured to change a sum of opening areas of the ejectors used to eject the liquid according to a change in a volumetric flow rate of the liquid supplied into the liquid inlet tube to regulate a pressure at which the liquid is ejected to fall within a predetermined range such that the sum of the opening areas of the ejectors used to eject the liquid is reducible according to a reduction in a volumetric flow rate of liquid supplied into the liquid inlet tube.

The volumetric flow rate of the liquid supplied into the liquid inlet tube may change according to a mass flow rate of the exhaust gas.

The exhaust gas treating apparatus may reduce the sum of the opening areas of the ejectors used to eject the liquid according to reduction in the volumetric flow rate of the liquid supplied into the liquid inlet tube.

The exhaust gas treating apparatus may include a plurality of trunk tubes, a plurality of liquid inlet tubes, and a plurality of volumetric flow rate regulating units. The liquid inlet tubes may be configured to supply the liquid respectively to the trunk tubes. The volumetric flow rate regulating units may be respectively configured to regulate the volumetric flow rate of the liquid supplied into the liquid inlet tubes. The ejectors may be provided in each of the trunk tubes. The sum of the opening areas of the ejectors used to eject the liquid may be changeable according to the change in the volumetric flow rate of the liquid that flows through a liquid volumetric flow rate measuring unit before branching into the liquid inlet tubes.

The exhaust gas treating apparatus may include a liquid volumetric flow rate controller. The liquid volumetric flow rate controller may be configured to control the sum of the opening areas of the ejectors by allowing or blocking the supply of the liquid into one or more of the trunk tubes, according to the change in the volumetric flow rate of the liquid supplied into the liquid inlet tubes.

The ejectors may each eject the liquid at a predetermined ejection angle within a horizontal plane perpendicular to the height direction of the reaction tower. The height direction of the reaction tower may be directed from a bottom portion of the reaction tower through which the exhaust gas is introduced to a top portion of the reaction tower through which the exhaust gas is emitted. The ejection angle may span from a line connecting a central point of the ejection angle and a central point of the reaction tower and have 90 degrees or larger.

The trunk tube may include a trunk tube volumetric flow rate regulating unit. The trunk tube volumetric flow rate regulating unit may be configured to regulate the volumetric flow rate of the liquid conveyed in the height direction of the reaction tower or in a direction opposite to the height direction. The height direction of the reaction tower may be directed from a bottom portion of the reaction tower through which the exhaust gas is introduced to a top portion of the reaction tower through which the exhaust gas is emitted.

A second aspect of the innovations herein provides an exhaust gas treating apparatus for treating an exhaust gas. The exhaust gas treating apparatus may include a reaction tower, a trunk tube, and a plurality of ejectors. The exhaust gas may be introduced reaction tower. The trunk tube may be provided within the reaction tower. A liquid to treat the exhaust gas may be supplied into the trunk tube. The ejectors may be configured to eject the liquid supplied thereinto from the trunk tube. A sum of opening areas of the ejectors used to eject the liquid may be changeable according to a change in a volumetric flow rate of the liquid supplied into the trunk tube. The trunk tube may include a plurality of trunk tube volumetric flow rate regulating units. The trunk tube volumetric flow rate regulating units may be configured to regulate the volumetric flow rate of the liquid conveyed in a height direction of the reaction tower. The height direction of the reaction tower may be directed from a bottom portion of the reaction tower through which the exhaust gas is introduced to a top portion of the reaction tower through which the exhaust gas is emitted. The trunk tube volumetric flow rate regulating units may be positioned at different positions in the height direction. The liquid may be supplied into the trunk tube to be conveyed from the bottom portion to the top portion. The trunk tube volumetric flow rate regulating units may be used in an order from the top portion to the bottom portion to block the liquid according to reduction in the volumetric flow rate of the liquid supplied into the trunk tube.

The trunk tube may include a plurality of trunk tube volumetric flow rate regulating units positioned at different positions in the height direction. The liquid may be supplied into the trunk tube to be conveyed from the top portion to the bottom portion. The trunk tube volumetric flow rate regulating units may be used in an order from the bottom portion to the top portion to block the liquid according to reduction in the volumetric flow rate of the liquid supplied into the trunk tube.

A cross-sectional area of the trunk tube in a horizontal plane perpendicular to the height direction may be larger at an upstream side of the liquid than at a downstream side.

The exhaust gas treating apparatus may further include a plurality of branch tubes. The branch tubes may be positioned at different positions in the height direction of the reaction tower. The height direction of the reaction tower may be directed from a bottom portion of the reaction tower through which the exhaust gas is introduced to a top portion of the reaction tower through which the exhaust gas is emitted. The branch tubes may extend from an outer side surface of the trunk tube toward an inner side surface of the reaction tower. Cross-sectional areas of the branch tubes may be larger at an upstream side of the liquid than at a downstream side.

The exhaust gas treating apparatus may further include a plurality of branch tubes. The branch tubes may be positioned at different positions in the height direction of the reaction tower. The height direction of the reaction tower may be directed from a bottom portion of the reaction tower through which the exhaust gas is introduced to a top portion of the reaction tower through which the exhaust gas is emitted. The branch tubes may extend from an outer side surface of the trunk tube toward an inner side surface of the reaction tower. The ejectors may be provided on each of the branch tubes and positioned at different positions in a direction in which each branch tube extends. The exhaust gas treating apparatus may further include a first branch-tube volumetric flow rate regulating unit between at least two ejectors provided on each of the branch tubes. The first branch-tube volumetric flow rate regulating unit may be configured to regulate the volumetric flow rate of the liquid conveyed in the direction in which each branch tube extends.

The exhaust gas treating apparatus may further include a second branch-tube volumetric flow rate regulating unit between the trunk tube and one of the at least two ejectors that is closer or closest to the trunk tube. The second branch-tube volumetric flow rate regulating unit may be configured to regulate the volumetric flow rate of the liquid conveyed in the direction in which each branch tube extends. The first branch-tube volumetric flow rate regulating unit and the second branch-tube volumetric flow rate regulating unit may be used in an order of the first branch-tube volumetric flow rate regulating unit and the second branch-tube volumetric flow rate regulating unit to block the liquid according to reduction in the liquid supplied into the trunk tube.

A third aspect of the innovations herein provides an exhaust gas treating apparatus for treating an exhaust gas. The exhaust gas treating apparatus may include a reaction tower, a plurality of trunk tubes, a plurality of ejectors, an exhaust gas inlet tube, a plurality of liquid inlet tubes, and a plurality of volumetric flow rate regulating units. The exhaust gas may be introduced into the reaction tower. The trunk tubes may be provided outside the reaction tower. The trunk tubes may extend in a height direction of the reaction tower. A liquid to treat the exhaust gas may be supplied into the trunk tubes. The ejectors may be provided in each of the trunk tubes. The ejectors may be configured to eject the liquid supplied thereinto from each of the trunk tubes in a direction in which the exhaust gas swirls. The exhaust gas inlet tube may be connected to the reaction tower to cause the exhaust gas to swirl within the reaction tower. The liquid inlet tubes may be configured to supply the liquid respectively to the trunk tubes. The volumetric flow rate regulating units may be configured to change a sum of opening areas of the ejectors used to eject the liquid according to a change in a volumetric flow rate of the liquid supplied into the liquid inlet tubes. The volumetric flow rate regulating units may be configured to regulate a pressure at which the liquid is ejected to fall within a predetermined range.

The exhaust gas treating apparatus may further include a liquid volumetric flow rate controller. The liquid volumetric flow rate controller may be configured to control the volumetric flow rate of the liquid supplied into the trunk tubes. The liquid volumetric flow rate controller may cause the ejectors, to eject the liquid, that are provided in at least a pair of trunk tubes that are arranged oppositely with respect to a central point of the reaction tower in a horizontal plane perpendicular to the height direction of the reaction tower. The height direction of the reaction tower may be directed from a bottom portion of the reaction tower through which the exhaust gas is introduced to a top portion of the reaction tower through which the exhaust gas is emitted.

The summary clause does not necessarily describe all necessary features of the embodiments of the present invention. The present invention may also be a sub-combination of the features described above.

### BRIEF DESCRIPTION OF THE DRAWINGS

Fig. 1 shows an exhaust gas treating apparatus 100 relating to a first embodiment.
Fig. 2 shows a cross-section of a reaction tower 10 of the exhaust gas treating apparatus 100 along the x-y plane perpendicular to the z direction.
Fig. 3 shows a case where the ejection angle α of nozzles 24 is 90 degrees.
Fig. 4 shows a case where the ejection angle α of the nozzles 24 is larger than 90 degrees.
Fig. 5A shows how the nozzle 24 positioned between a top portion 12 and a bottom portion 14 is directed.
Fig. 5B shows how the nozzle 24 positioned in the top portion 12 is directed.
Fig. 5C shows how the nozzle 24 positioned in the bottom portion 14 is directed.
Fig. 6 shows an exhaust gas treating apparatus 120 relating to a second embodiment.
Fig. 7 shows a first modification example of the second embodiment.
Fig. 8 shows a second modification example of the second embodiment.
Fig. 9 shows a third modification example of the second embodiment.
Fig. 10 shows a fourth modification example of the second embodiment.
Fig. 11 shows an exhaust gas treating apparatus 130 relating to a third embodiment.
Fig. 12 shows a first modification example of the third embodiment.
Fig. 13 shows an exhaust gas treating apparatus 140 relating to a fourth embodiment.
Fig. 14 shows a cross-section of a reaction tower 10 of the exhaust gas treating apparatus 140 along the x-y plane perpendicular to the z direction.

### EXEMPLARY EMBODIMENTS OF THE INVENTION

Hereinafter, some embodiments of the present invention will be described. The embodiments do not limit the invention according to the claims, and all the combinations of the features described in the embodiments are not necessarily essential to means provided by aspects of the invention.

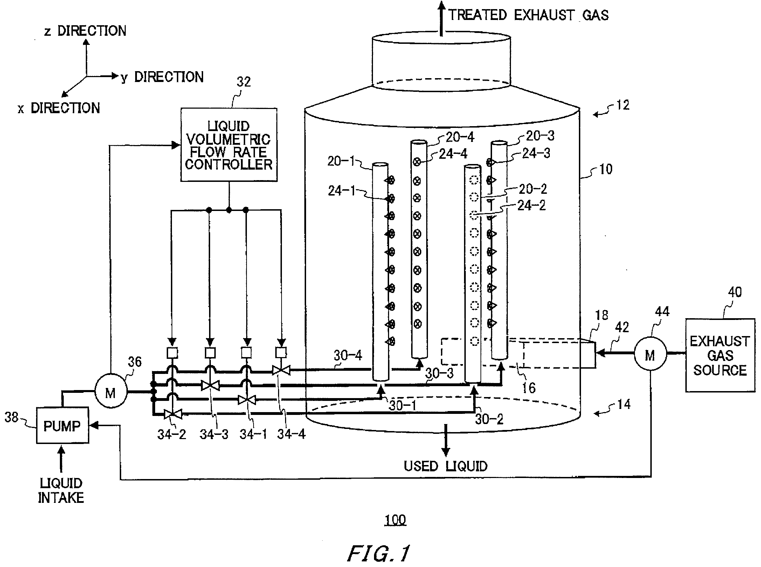

Fig. 1 shows an exhaust gas treating apparatus 100 relating to a first embodiment. The exhaust gas treating apparatus 100 is configured to treat an exhaust gas 42 emitted from an exhaust gas source 40 such as an engine for a ship. The exhaust gas treating apparatus 100 is specifically designed to remove the harmful substances such as sulfur components contained in the exhaust gas 42. In the present example, the exhaust gas treating apparatus 100 includes a reaction tower 10, an exhaust gas inlet tube 18, a plurality of trunk tubes 20, a plurality of liquid inlet tubes 30, a liquid volumetric flow rate controller 32, a plurality of valves 34, a liquid volumetric flow rate measuring unit 36, a pump 38, and an exhaust gas mass flow rate measuring unit 44.

The exhaust gas inlet tube 18 introduces the exhaust gas 42 emitted from the exhaust gas source 40 into the reaction tower 10. The reaction tower 10 has one opening 16 on the side surface thereof. The exhaust gas inlet tube 18 is connected to the bottom portion 14 of the reaction tower 10. The exhaust gas inlet tube 18 is connected to the reaction tower 10 in a manner to cause the introduced exhaust gas 42 to helically swirl within the reaction tower 10. When cyclone scrubbers are provided in the engines and boilers of ships, the reaction tower 10 is configured so that it can be provided in the engine rooms or on the decks. For example, the reaction tower 10 has a height of 7 m or less. Preferably, the height of the reaction tower 10 is 5 m or less.

The mass flow rate of the exhaust gas 42 in the reaction tower 10 is regulated according to the removal efficiency of the sulfur components. For example, when the required removal efficiency of the sulfur components is 98%, the mass flow rate of the exhaust gas 42 is 6 m/s or less, preferably 3 m/s or less under normal conditions of 0°C and 1 atm. When the required removal efficiency of the sulfur components is 90%, the mass flow rate of the exhaust gas 42 is 10 m/s or less, preferably 6 m/s or less under normal conditions of 0°C and 1 atm.

The exhaust gas mass flow rate measuring unit 44 is positioned between the opening 16 and the exhaust gas source 40. The exhaust gas mass flow rate measuring unit 44 is configured to measure the amount of the exhaust gas 42 introduced per unit time into the reaction tower 10 through the opening 16 from the exhaust gas source 40. Note that the amount of the exhaust gas 42 per unit time can also be calculated based on the output and fuel consumption of the exhaust gas source 40.

The reaction tower 10 has an internal space extending in the height direction of the reaction tower 10 between the bottom portion 14, thorough which the exhaust gas 42 is introduced, and the top portion 12, through which the exhaust gas 42 is emitted. The height direction is perpendicular to, for example, the ground or water surface. As used herein, the height direction is denoted as the z direction. The horizontal plane perpendicular to the z direction is defined by the x-y plane formed by the x direction and the y direction that are perpendicular to each other.

In the internal space of the reaction tower 10, the plurality of trunk tubes 20 are provided. In the present example, four trunk tubes 20 are provided in the internal space of the reaction tower 10. There may be, however, five or more trunk tubes 20. For example, there may be six trunk tubes 20.

The structures that may come into contact with liquids, for example, the reaction tower 10 and the trunk tubes 20 are required to have resistance against sea water or alkaline fluids. For example, when the structures that may come into contact with liquids are made of low-cost materials, such structures may be made of ferrous materials such as SS400. The structures that may come into contact with liquids may be made of copper alloy such as naval brass, aluminum alloy such as aluminum brass, nickel alloy such as cupronickel, or stainless steel such as SUS316L.

The trunk tubes 20 each extend in the z direction within the reaction tower 10. The trunk tubes 20 are each supplied with the liquid used to treat the exhaust gas 42. The trunk tubes 20 each convey in the z direction the liquid to be ejected. The liquid is, for example, sea water. The liquid may alternatively be an alkaline liquid such as a caustic soda solution.

The trunk tubes 20 have a plurality of nozzles 24 that may serve as a plurality of ejectors that are positioned at a plurality of different heights and configured to eject the liquid supplied from the trunk tubes 20. The nozzles 24 eject the liquid in a conical shape through the openings thereof. In the present example, the nozzles 24 are spray nozzles that can eject liquids in a hollow cone shape. A plurality of nozzles 24 are provided in each of the trunk tubes 20. In each trunk tube 20, the nozzles 24 provided in this one trunk tube 20 are arranged in such a manner that the openings thereof are directed in the same direction. The openings of the nozzles 24 are schematically shown by the circled cross marks, but the nozzles 24 are normally configured to eject the liquid from the circular edges thereof.

The amount of the liquid ejected from the nozzles 24 is a chemical equivalent that can neutralize the sulfur components contained in the exhaust gas 42 to be treated. The amount of the liquid ejected may be a chemical equivalent that is 1.2 times as many as the sulfur components contained in the exhaust gas 42.

The nozzles 24 provided on different ones of the trunk tubes 20 are arranged in such a manner that the openings are directed in different directions. In the present example, the openings of the nozzles 24-1 on the trunk tube 20-1 are directed in the y direction, and the openings of the nozzles 24-2 on the trunk tube 20-2 are directed in the (-x) direction. In addition, the openings of the nozzles 24-3 on the trunk tube 20-3 are directed in the (-y) direction, and the openings of the nozzles 24-4 on the trunk tube 20-4 are directed in the x direction.

The pump 38 acquires the liquid to be supplied into the reaction tower 10. When the exhaust gas treating apparatus 100 is provided on ships, the pump 38 pumps up sea water, lake water, river water or the like. In the present example, the pump 38 acquires from the exhaust gas mass flow rate measuring unit 44 the current mass flow rate of the exhaust gas 42 that is being introduced into the reaction tower 10. In the present example, the pump 38 regulates the volumetric flow rate of the liquid supplied from the liquid intake into the liquid inlet tubes 30, according to the mass flow rate of the exhaust gas 42. In the present example, the pump 38 reduces the volumetric flow rate of the liquid supplied into the liquid inlet tubes 30 if the mass flow rate of the exhaust gas 42 drops. If the mass flow rate of the exhaust gas 42 increases later, the pump 38 of the present example raises the volumetric flow rate of the liquid supplied to the liquid inlet tubes 30. In other words, the pump 38 of the present example changes the volumetric flow rate of the liquid supplied into the trunk tubes 20 according to the change in the mass flow rate of the exhaust gas 42. Note that the volumetric flow rate of the liquid is expressed as the value per unit time.

The liquid inlet tubes 30 convey the liquid pumped up by the pump 38 to supply the liquid to the trunk tubes 20 positioned in the reaction tower 10. Each liquid inlet tube 30 is provided with a valve 34. In the present example, the valves 34 are electric motor valves, but may be electromagnetic valves. The valves 34 are controlled by the liquid volumetric flow rate controller 32.

The liquid volumetric flow rate measuring unit 36 is configured to measure the volumetric flow rate of the liquid output from the pump 38. The liquid volumetric flow rate controller 32 can acquire from the liquid volumetric flow rate measuring unit 36 the volumetric flow rate of the liquid output from the pump 38. The liquid volumetric flow rate controller 32 regulates the volumetric flow rate of the liquid flowing through the liquid inlet tubes 30 by opening and closing one or more of the valves 34, based on the volumetric flow rate of the liquid output from the pump 38 (the volumetric flow rate of the liquid supplied to the trunk tubes 20).

In the present example, the exhaust gas treating apparatus 100 can change the sum of the opening areas of the nozzles 24, according to the change in the volumetric flow rate of the liquid supplied into the trunk tubes 20. As used herein, the expression "the opening areas of the nozzles 24" denotes the areas of the openings of the nozzles 24 through which the liquid can be effectively ejected. For example, the opening area of a given nozzle 24 can be considered to be zero when the given nozzle 24 can not eject the liquid since the liquid supply is blocked. On the other hand, when the given nozzle 24 can eject the liquid, the opening area of the given nozzle 24 is considered to be non-zero and counted into the total of the opening areas. Note that the opening area of each nozzle 24 can be arbitrarily determined according to the shape of the opening of the nozzle 24.

In the present example, the liquid volumetric flow rate controller 32 closes one or more of the valves 34 to block the liquid supply to the corresponding one or more of the trunk tubes 20. As a result of this, the nozzles 24 provided in the trunk tubes 20 that are blocked from the liquid supply are prevented from ejecting the liquid. In other words, the opening areas of the nozzles 24 can be reduced by closing one or more of the valves 34. In addition, afterwards, by opening the closed valves 34, the liquid supply can be resumed for the corresponding one or more of the trunk tubes 20. In this manner, the nozzles 24 provided in the trunk tubes 20 for which the liquid supply is resumed can again eject the liquid. In other words, the opening areas of the nozzles 24 can be increased by opening one or more of the valves 34.

For example, when all of the valves 34-1 to 34-4 are open, the sum of the opening areas of the nozzles 24 of the exhaust gas treating apparatus 100 takes a maximum value. When one of the valves 34 is closed, the sum of the opening areas of the nozzles 24 is 75% of the maximum value. When two of the valves 34 are closed, the sum of the opening areas of the nozzles 24 is 50% of the maximum value, and when three of the valves 34 are closed, the sum of the opening areas of the nozzles 24 is 25% of the maximum value. When all of the valves 34 are closed, the sum of the opening areas of the nozzles 24 is 0% of the maximum value. In this way, the exhaust gas treating apparatus 100 of the present example can change the sum of the opening areas of the nozzles 24.

In the present example, the exhaust gas treating apparatus 100 reduces the sum of the opening areas of the nozzles 24 if the volumetric flow rate of the liquid supplied to the trunk tubes 20 drops according to the change in the mass flow rate of the exhaust gas 42. Accordingly, the liquid can be prevented from being excessively supplied while the ejection pressure at which the liquid is ejected can be maintained. This can save the power consumption required to operate the pump 38, which is configured to pump up the liquid. In addition, if the volumetric flow rate of the liquid supplied to the trunk tubes 20 changes (decreases or increases) according to the change in the mass flow rate of the exhaust gas 42, the sum of the opening areas of the nozzles 24 can be controlled (reduced or enlarged) according to the change in the mass flow rate of the exhaust gas 42 by opening and closing any of the valves 34.

Generally speaking, the liquid has a sufficiently fine droplet size when the nozzles 24 eject the liquid at an ejection pressure of approximately 0.1 MPa or more. When the volumetric flow rate of the liquid supplied to the trunk tubes 20 decreases according to the change in the mass flow rate of the exhaust gas 42, however, the ejection pressure of the nozzles 24 may drop unless the sum of the opening areas of the nozzles 24 changes. The droplet size of the liquid increases as the ejection pressure of the nozzles 24 falls. For example, when the ejection pressure of the nozzles 24 is approximately 0.05 MPa, the liquid has a larger droplet size than when the ejection pressure is approximately 0.1 MPa. This reduces the gas-liquid contact area between the liquid and the exhaust gas 42. In other words, when the ejection pressure of the nozzles 24 drops to approximately 0.05 MPa, the liquid is capable of treating the exhaust gas 42 less effectively than expected with the flow rate.

In the present example, the exhaust gas treating apparatus 100 can change the volumetric flow rate of the liquid supplied to the trunk tubes 20 according to the change in the mass flow rate of the exhaust gas 42 and can further change the sum of the opening areas of the nozzles 24. Therefore, the ejection pressure at which the liquid is ejected can be controlled to remain constant or to fall within a predetermined range. For example, the exhaust gas treating apparatus 100 of the present example can maintain an ejection pressure of 0.1 MPa by changing the volumetric flow rate of the liquid supplied to the trunk tubes 20 according to the change in the mass flow rate of the exhaust gas 42 and further changing the sum of the opening areas of the nozzles 24 according to the change in the volumetric flow rate of the liquid. In this way, the droplet size of the ejected liquid can be finer than when the ejection pressure is 0.05 MPa. As is apparent from the above, the exhaust gas treating apparatus 100 of the present example can maintain the ejection pressure of the liquid at a constant level suitable for the liquid spray. Alternatively, the exhaust gas treating apparatus 100 of the present example can keep the ejection pressure of the liquid within a predetermined range suitable for the liquid spray. As a consequence, the exhaust gas treating apparatus 100 of the present example can maintain the liquid's capability of treating the exhaust gas 42 per flow rate even when the volumetric flow rate of the liquid drops.

Note that the liquid volumetric flow rate controller 32 may be omitted in a modification example. In this case, the user manually opens and closes one or more of the valves 34 after using the liquid volumetric flow rate measuring unit 36 to observe the volumetric flow rate of the liquid that is determined by the mass flow rate of the exhaust gas 42. In this modification example without the liquid volumetric flow rate controller 32, the valves 34 are ball valves or gate valves that can be manually opened and closed. This modification example can also produce the similar effects as when the liquid volumetric flow rate controller 32 is used.

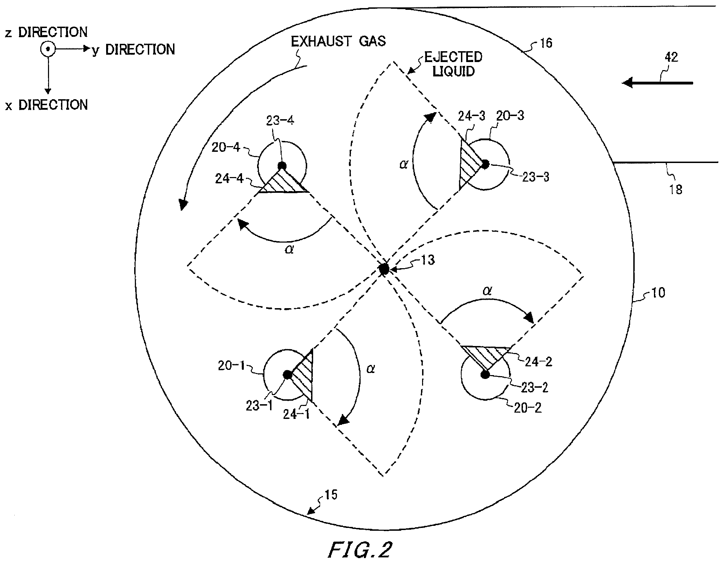

Fig. 2 shows a cross-section of the reaction tower 10 of the exhaust gas treating apparatus 100 along the x-y plane perpendicular to the z direction. In Fig. 2, a central point 13 of the reaction tower 10 in the x-y plane is indicated by the black point. In the present example, the central point 13 is at equal distances from the inner side surface 15 of the reaction tower 10. The nozzles 24 are each configured to eject the liquid at a predetermined ejection angle. Here, the central point of the ejection angle in the x-y plane is indicated by the black point (in the present example, coinciding with the central point 23 of the corresponding trunk tube 20). In the present example, the central point 13 of the reaction tower 10 is positioned at equal distances from the central points 23-1 to 23-4 of the four trunk tubes 20. When the distance from the central point 13 to the inner side surface 15 is expressed as 2r, the distance from the central point 13 to the central point 23 is, for example, within the range of r/2 to r.

The shaded areas represent the cross-sections of the nozzles 24 in the x-y plane. In the x-y plane, the liquid spreads in a fan-shaped manner when ejected from the nozzles 24. In the x-y plane, the nozzles 24 each eject the liquid at a predetermined ejection angle. The nozzles 24 eject the liquid in a fan-shaped manner with a central angle α in the x-y plane. Note that, in the present example, the central angle α is defined as an angle that spans clockwise from the line connecting the central point 23 of the trunk tube 20 and the central point 13 of the reaction tower 10. In one example, the ejection angle α is 90 degrees but may be larger than 90 degrees. Here, in an alternative example, the central point of the ejection angle in the x-y plane may be any point in the trunk tube 20 and may not necessarily coincide with the central point 23 of the trunk tube 20.

For better visual intelligibility of the drawing, the ejected liquid is depicted as not reaching the inner side surface 15 of the reaction tower 10. In fact, however, the ejected liquid reaches the inner side surface 15 of the reaction tower 10 in the exhaust gas treating apparatus 100. Since the exhaust gas 42 moves upwards in the z direction while swirling within the reaction tower 10, the liquid sprayed against the inner side surface 15 can absorb the sulfur components and the like of the exhaust gas 42. This is referred to as the wetted wall effects. Since the exhaust gas 42 forms a swirl flow, the exhaust gas 42 exhibits a higher flow velocity near the inner side surface 15 of the reaction tower 10 than in the vicinity of the central point 13.

In the present example, the liquid is ejected in such a manner that no gap is formed in the vicinity of the central point 13. In the vicinity of the central point 13, the flow velocity of the exhaust gas 42 is lower than in the vicinity of the inner side surface 15 of the reaction tower 10. For this reason, some people may think that it is not necessary for the nozzles 24 to eject the liquid to reach the vicinity of the central point 13.

If the liquid does not reach the vicinity of the central point 13, however, the exhaust gas 42 flows into the gap formed in the vicinity of the central point 13. This lowers the liquid's efficiency of absorbing the sulfur components and the like. If the nozzles 24 are configured to eject the liquid to reach both the vicinity of the central point 13 and the vicinity of the inner side surface 15 as in the present example, the liquid can achieve improved absorption efficiency. In the present example, the liquid sprayed regions in the x-y plane of the liquid ejected at the ejection angle α from the respective nozzles 24 overlap each other at least at the central point 13 of the reaction tower 10.

In Fig. 2, the exhaust gas 42 is introduced into the reaction tower 10 through the opening 16 anti-clockwise. Accordingly, the openings of the nozzles 24-1 to 24-4 are respectively directed in the y, (-x), (-y) and x directions in an anti-clockwise manner. This can prevent the ejected liquid from obstructing the swirl flow of the exhaust gas 42. In an alternative example, the exhaust gas 42 may be introduced into the reaction tower 10 clockwise. In this case, the openings of the nozzles 24-1 to 24-4 are also directed in a clockwise manner.

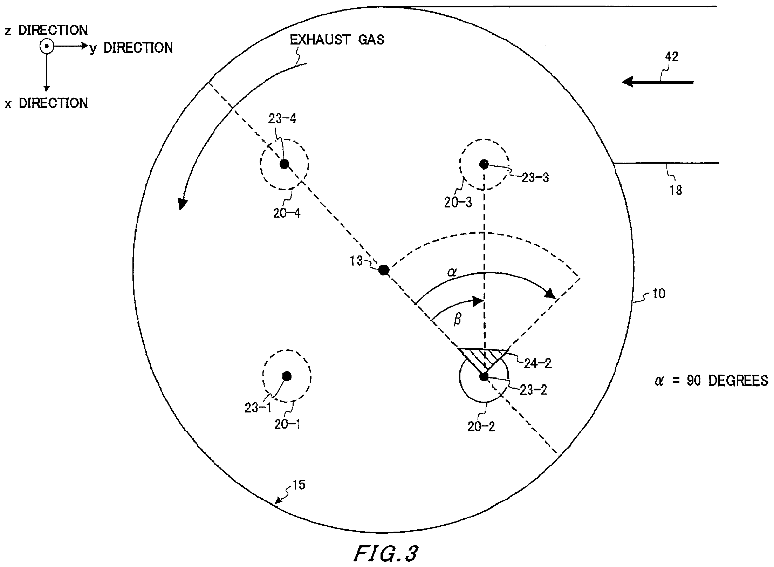

Fig. 3 shows a case where the ejection angle α of the nozzles 24 is 90 degrees. Note that Fig. 3 only shows the nozzles 24-2 provided in the trunk tube 20-2 and does not show the other nozzles 24. In the present example, an angle of 45 degrees is formed between the line segment connecting the central point 13 and the central point 23-2 and the line segment connecting the central point 23-2 and the central point 23-3. Here, the other nozzles 24 also have an ejection angle α of 90 degrees.

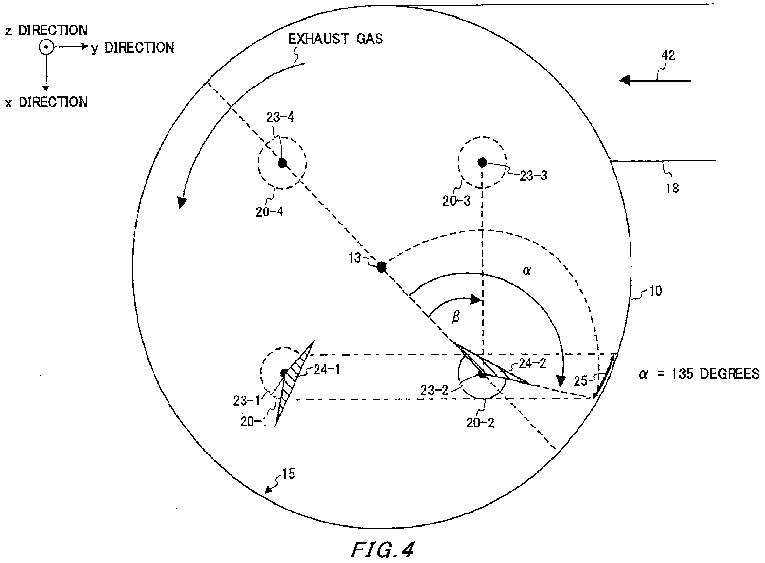

Fig. 4 shows a case where the ejection angle α of the nozzles 24 is larger than 90 degrees. Fig. 4 also only shows the nozzles 24-2 provided in the trunk tube 20-2 and does not show the other nozzles 24. In the present example, the ejection angle α is 135 degrees.

Part of the liquid ejected from the nozzles 24-1 is directed from the trunk tube 20-1 toward the trunk tube 20-2. Since the trunk tube 20-2 blocks part of the liquid ejected from the nozzles 24-1, a shadow 25 is formed on the inner side surface 15. In the present example, the ejection angle α of the nozzles 24-2 is large enough to cover the shadow 25. Therefore, in the present example, the shadow 25 formed by the trunk tube 20-2 can be compensated for by the nozzles 24-2 of the trunk tube 20-2. The liquid sprayed regions of the nozzles 24-1 to 24-4 that can eject the liquid at the ejection angle α entirely cover the inner side surface 15 of the reaction tower 10 in the horizontal plane (the x-y plane). In the z direction, the liquid sprayed regions of the nozzles 24-1 to 24-4 have a predetermined width. The liquid sprayed regions of the nozzles 24 arranged adjacently to each other in the z direction in the trunk tube 20 may overlap each other in the z direction or may be continuously adjacent to each other in the z direction. In this manner, the liquid can be sprayed against the entire inner side surface 15 of the reaction tower 10. As a result, the so-called wetted wall effect can be greatly produced.

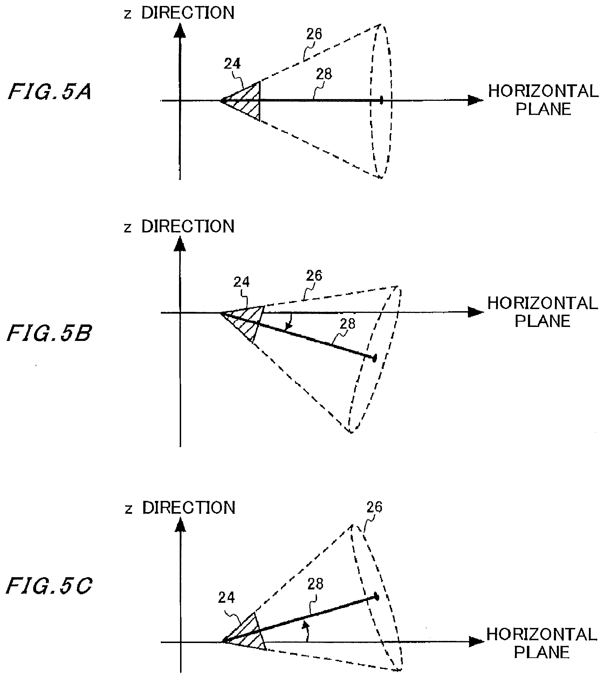

Fig. 5A shows how the nozzles 24 positioned between the top portion 12 and the bottom portion 14 are directed. Fig. 5B shows how the nozzles 24 positioned in the top portion 12 are directed. Fig. 5C shows how the nozzles 24 positioned in the bottom portion 14 are directed.

As shown in Fig. 5A, a conical shape 26 schematically shows the liquid ejected in a hollow cone shape from the nozzles 24. The axis of the cone expressed by the conical shape 26 is represented as an axis 28. As shown in Fig. 5B, the nozzles 24 positioned in the top portion 12 may be directed in such a manner that the axis 28 of the conical shape 26 is directed toward the bottom portion 14 relative to the horizontal plane. In this way, even if the pressure of the nozzles 24 is lower than a desirable pressure (for example, 0.1 MPa), the sprayed liquid can achieve a better conical shape than when the nozzles 24 in the top portion 12 are arranged in such a manner that the axis 28 is directed not along the horizontal plane but toward the top portion 12.

As shown in Fig. 5C, the nozzles 24 positioned at the bottom portion 14 may be directed in such a manner that the axis 28 of the conical shape 26 is directed not along the horizontal plane but toward the top portion 12. When the liquid is supplied into the reaction tower 10 through the bottom portion 14, the pressure is high in the bottom portion 14. Therefore, the sprayed liquid can achieve a better conical shape even if the nozzles 24 positioned in the bottom portion 14 are arranged in such a manner that the axis 28 is directed not along the horizontal plane but toward the top portion 12.

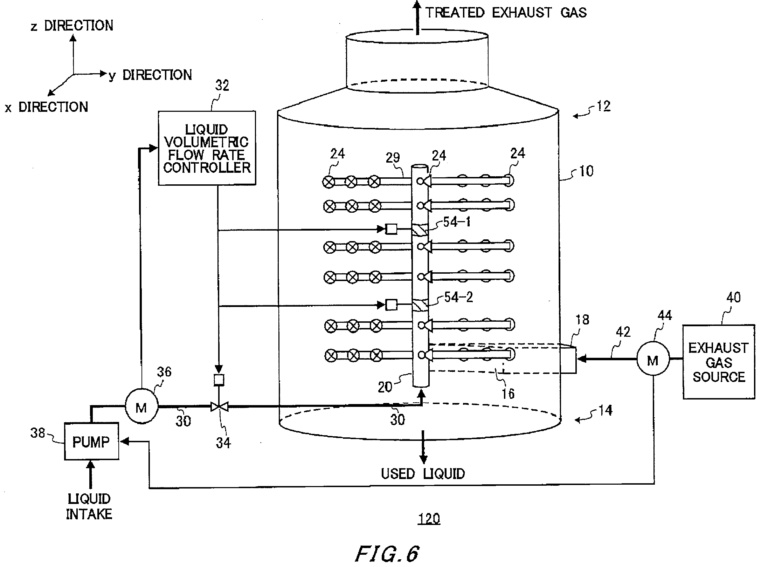

Fig. 6 shows an exhaust gas treating apparatus 120 relating to a second embodiment. In the present example, only one trunk tube 20 is provided in the reaction tower 10. In the trunk tube 20, a plurality of branch tubes 29 are provided adjacently to each other in the height direction. The trunk tube 20 has valves 54 as a trunk tube volumetric flow rate regulating unit. The valves 54 are configured to regulate the volumetric flow rate of the liquid conveyed in the height direction of the reaction tower 10. The valves 54 are arranged at different positions in the height direction. In these regards, the second embodiment is different from the first embodiment. Except for these, the second embodiment is the same as the first embodiment.

The valves 54 of the present example are the same as the valves 34 of the first embodiment. In the present example, the trunk tube 20 has a valve 54-1 positioned in the top portion 12 and a valve 54-2 positioned in the bottom portion 14. Between the bottom portion 14 and the valve 54-2, a plurality of branch tubes 29 are provided in the trunk tube 20. Between the valve 54-2 and the valve 54-1, a plurality of branch tubes 29 are also provided in the trunk tube 20. Between the valve 54-1 and the top portion 12, a plurality of branch tubes 29 are also provided in the trunk tube 20. A plurality of nozzles 24 are respectively provided on the branch tubes 29 at different positions. Fig. 6 shows that the nozzles 24 are provided on the side surfaces of the branch tubes 29, but the present embodiment is not limited to such. The nozzles 24 may alternatively be provided on the branch tubes 29 to protrude toward the top portion 12 while the opening surfaces of the nozzles 24 still face the horizontal direction. Alternatively, the nozzles 24 may be provided on the lower side of the branch tubes 29 as if they hang from the branch tubes 29. When the nozzles 24 are provided to protrude toward the top portion 12 or on the lower side of the branch tubes 29, the ejection angle of the nozzles 24 is flexibly controlled in the horizontal direction.

The liquid is supplied to the trunk tube 20 to be conveyed from the bottom portion 14 to the top portion 12. The valves 54 are used in the order from the top portion 12 to the bottom portion 14 to block the liquid as the volumetric flow rate of the liquid supplied to the trunk tube 20 drops. For example, if the volumetric flow rate of the liquid supplied to the trunk tube 20 drops, the liquid volumetric flow rate controller 32 first closes the valve 54-1.
If the volumetric flow rate of the liquid supplied to the trunk tube 20 further drops, the liquid volumetric flow rate controller 32 next closes the valve 54-2. After this, if the volumetric flow rate of the liquid supplied to the trunk tube 20 rises, the liquid volumetric flow rate controller 32 first opens the valve 54-2. If the volumetric flow rate of the liquid supplied to the trunk tube 20 further rises, the liquid volumetric flow rate controller 32 next opens the valve 54-1. By doing so, the sum of the opening areas of the nozzles 24 used to eject the liquid can be changed according to the change in the volumetric flow rate of the liquid supplied to the trunk tube 20.

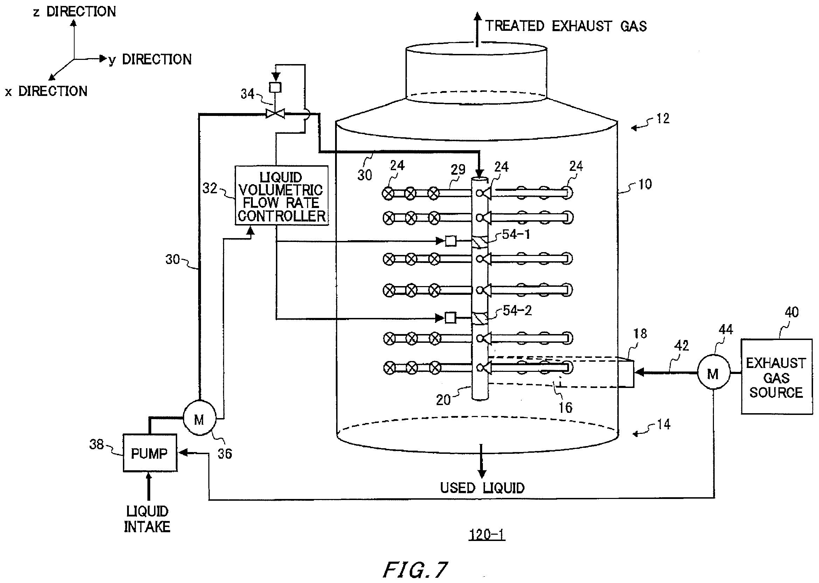

Fig. 7 shows a first modification example of the second embodiment. In the present example, the liquid is supplied to the trunk tube 20 to be conveyed from the top portion 12 to the bottom portion 14. In other words, the liquid is conveyed in the direction opposite to the height direction of the reaction tower 10 (the -z direction). In this regard, the exhaust gas treating apparatus 120-1 shown in Fig. 7 is different from the exhaust gas treating apparatus 120 shown in Fig. 6. Except for this, the exhaust gas treating apparatus 120-1 shown in Fig. 7 is the same as the exhaust gas treating apparatus 120.

The valves 54 are used in the order from the bottom portion 14 to the top portion 12 to block the liquid as the volumetric flow rate of the liquid supplied to the trunk tube 20 drops. For example, if the volumetric flow rate of the liquid supplied to the trunk tube 20 drops, the liquid volumetric flow rate controller 32 first closes the valve 54-2. If the volumetric flow rate of the liquid supplied to the trunk tube 20 further drops, the liquid volumetric flow rate controller 32 next closes the valve 54-1. After this, if the volumetric flow rate of the liquid supplied to the trunk tube 20 rises, the liquid volumetric flow rate controller 32 first opens the valve 54-1. If the volumetric flow rate of the liquid supplied to the trunk tube 20 further rises, the liquid volumetric flow rate controller 32 may next open the valve 54-2. By doing so, the sum of the opening areas of the nozzles 24 used to eject the liquid can be changed according to the change in the volumetric flow rate of the liquid supplied to the trunk tube 20.

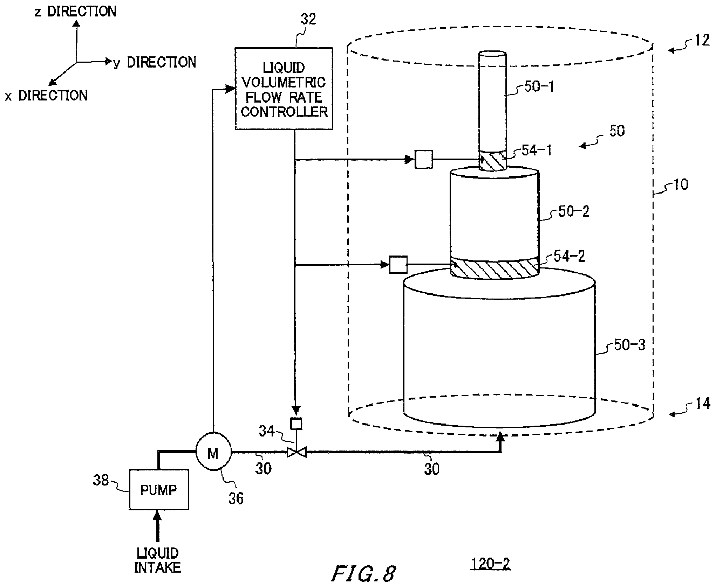

Fig. 8 shows a second modification example of the second embodiment. In the present example, the liquid is supplied to be conveyed from the bottom portion 14 to the top portion 12. Trunk tubes 50 of the present example are configured such that the trunk tube 50 positioned at the upstream side of the liquid flow has a larger horizontal cross-sectional area than the trunk tube 50 positioned at the downstream side. Here, the upstream side of the liquid flow is close to the pump 38. For example, a trunk tube 50-3 positioned in the bottom portion 14 is positioned at the upstream side of the liquid flow. On the other hand, the downstream side of the liquid flow is distant from the pump 38. For example, a trunk tube 50-1 positioned in the top portion 12 is positioned at the downstream side of the liquid flow. In the present example, the trunk tubes 50 decreases in the cross-sectional area toward the downstream side, which can prevent the ejection pressure from dropping at the downstream side. Note that Fig. 8 does not show the branch tubes 29.

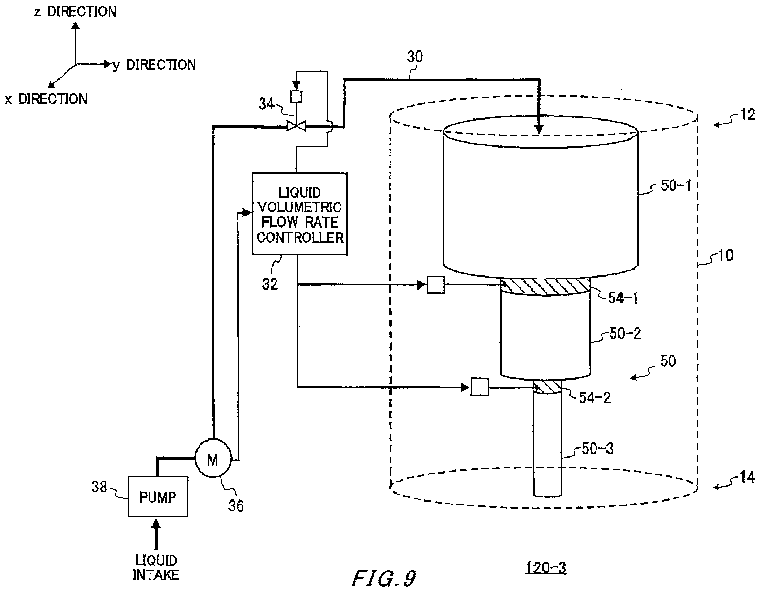

Fig. 9 shows a third modification example of the second embodiment. In the present example, the liquid is supplied to be conveyed from the top portion 12 to the bottom portion 14. Trunk tubes 50 of the present example are configured such that the trunk tube 50 positioned at the upstream side of the liquid flow has a larger horizontal cross-sectional area than the trunk tube 50 positioned at the downstream side. The ejection pressure may be controlled using the configuration of the present example. Note that Fig. 9 does not show the branch tubes 29.

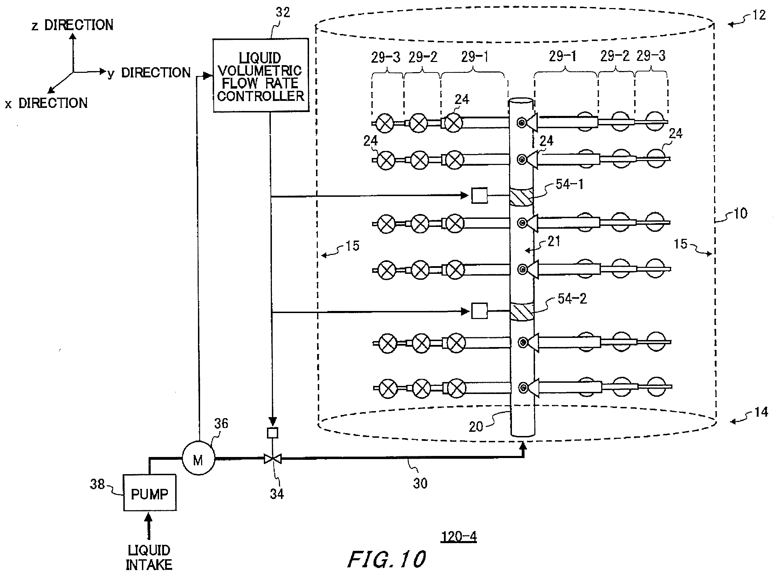

Fig. 10 shows a fourth modification example of the second embodiment. In the present example, the liquid is supplied through the bottom portion 14. In the present example, an exhaust gas treating apparatus 120-4 includes a plurality of branch tubes 29. The branch tubes 29 are provided respectively at different positions in the height direction and extend from the outer side surface 21 of the trunk tube 20 toward the inner side surface 15 of the reaction tower 10. In the present example, the branch tubes 29 positioned at the upstream side of the liquid flow have a larger cross-sectional area than the branch tubes 29 positioned at the liquid downstream side. In this regard, the exhaust gas treating apparatus 120-4 shown in Fig. 10 is different from the exhaust gas treating apparatus 120 shown in Fig. 6.

In the present example, the branch tubes 29 decrease in the cross-sectional area in the order of branch tubes 29-1, branch tubes 29-2 and branch tubes 29-3 from the outer side surface 21 of the trunk tube 20 toward the inner side surface 15 of the reaction tower 10. In the present example, the cross-sectional areas of the branch tubes 29 means the cross-sectional areas of the branch tubes 29 obtained by cutting the branch tubes 29 in the direction parallel to the height direction. The nozzles 24 are positioned at different positions in the direction in which the branch tubes 29 extend. The nozzles 24 are respectively provided on the branch tubes 29-1, the branch tubes 29-2 and the branch tubes 29-3. In the present example, the branch tubes 29-3 at the downstream side have a smaller cross-sectional area than the branch tubes 29-1 at the upstream side. This can prevent the ejection pressure from dropping at the downstream side.

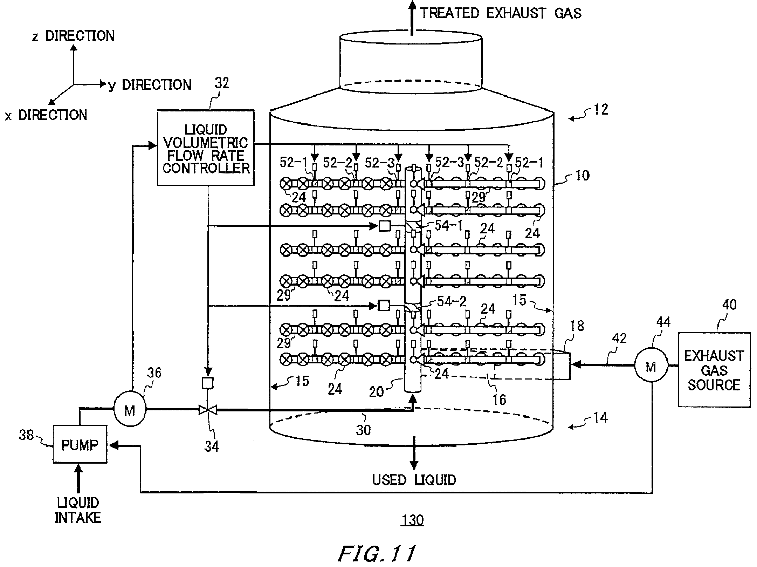

Fig. 11 shows an exhaust gas treating apparatus 130 relating to a third embodiment. In the exhaust gas treating apparatus 130 of the present example, a valve 52-1 is provided as a first branch-tube volumetric flow rate regulating unit between at least two nozzles 24 that are provided in each branch tube 29. In addition, a valve 52-2 and a valve 52-3 are provided. The valve 52-2 or 52-3 may serve as a second branch-tube volumetric flow rate regulating unit that is provided between the trunk tube 20 and one of at least two nozzles 24 that is closer or closest to the trunk tube 20. In this regard, the exhaust gas treating apparatus 130 shown in Fig. 11 is different from the exhaust gas treating apparatus 120 shown in Fig. 6. Except for this, the exhaust gas treating apparatus 130 shown in Fig. 11 is the same as the exhaust gas treating apparatus 120 shown in Fig. 6. Note that the exemplary configuration shown in Fig. 9 may be applied to the present example.

The first to third branch-tube valves 52-1 to 52-3 are configured to regulate the volumetric flow rate of the liquid conveyed in the direction in which the branch tubes 29 extend. The first to third branch-tube valves 52-1 to 52-3 for each branch tube 29 can operate independently. Note that, in the present example, the first to third valves 52-1 to 52-3 are used in the order from the first valve 52-1 to the third valve 52-3 to block the liquid, as the liquid supplied to the trunk tube 20 decreases. Subsequently, as the liquid supplied to the trunk tube 20 increases, the first to third valves 52-1 to 52-3 are used in the order from the third valve 52-3, the second valve 52-2 and the first valve 52-1 to resume the liquid supply. The liquid volumetric flow rate controller 32 controls, and opens and closes the first to third valves 52-1 to 52-3. In the above-described manner, as the volumetric flow rate of the liquid supplied to the trunk tube 20 changes, the sum of the opening areas of the nozzles 24 used to eject the liquid can be changed.

In the present example, the first valve 52-1 is positioned at the downstream side and the third valve 52-3 is positioned at the upstream side. In the present example, as the liquid supplied to the trunk tube 20 decreases, the first valve 52-1 at the downstream side is closed earlier than the second valve 52-2, and the second valve 52-2 is closed earlier than the third valve 52-3. This can prevent the ejection pressure from dropping at the downstream side. Alternatively or additionally, by controlling the first to third branch-tube valves 52-1 to 52-3, the opening areas of the nozzles 24 used to eject the liquid may be controlled such that the opening areas gradually decrease in the order from the bottom portion 14 to the top portion 12. For example, all of the first to third branch-tube valves 52-1 to 52-3 are opened in the bottom portion 14. In the middle portion, only some of the first branch-tube valves 52-1 are closed. In the top portion 12, all of the first branch-tube valves 52-1 are closed. In the above-described manner, as the volumetric flow rate of the liquid supplied to the trunk tube 20 changes, the sum of the opening areas of the nozzles 24 used to eject the liquid can be changed.

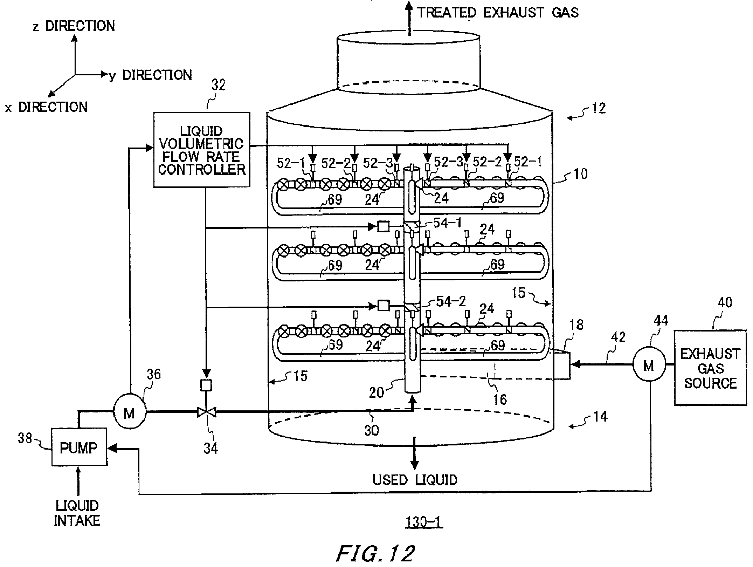

Fig. 12 shows a first modification example of the third embodiment. An exhaust gas treating apparatus 130-1 of the present example has U-shaped branch tubes 69. The bent portion of each U-shaped branch tube 69 faces the inner side surface 15 of the reaction tower 10. The ends of each U-shaped branch tube 69 that are oppositely positioned to the bent portion are connected to the trunk tube 20. In these regards, the exhaust gas treating apparatus 130-1 of the present example is different from the exhaust gas treating apparatus 130 shown in Fig. 11. Except for these, the exhaust gas treating apparatus 130-1 of the present example is the same as the exhaust gas treating apparatus 130 shown in Fig. 11. Note that the exemplary configuration shown in Fig. 9 may be applied to the present example.

In the present example, the nozzles 24 are arranged in a line on one of the two parallel linear portions of each U-shaped branch tube 69. A first branch-tube valve 52-1 is provided between at least two nozzles 24 on one of the linear portions of each U-shaped branch tube 69. In addition, a second branch-tube valve 52-2 or third branch-tube valve 52-3 is provided between the trunk tube 20 and one of at least two nozzles 24 that is closer or closest to the trunk tube 20.

The first to third valves 52-1 to 52-3 are used in the order from the first valve 52-1 to the third valve 52-3 to block the liquid, as the liquid supplied to the trunk tube 20 decreases. In the above-described manner, as the volumetric flow rate of the liquid supplied to the trunk tube 20 changes, the sum of the opening areas of the nozzles 24 used to eject the liquid can be changed.

As in the above-described example, the first valve 52-1 is positioned at the downstream side and the third valve 52-3 is positioned at the upstream side in the present example. As the liquid supplied to the trunk tube 20 decreases, the first valve 52-1 at the downstream side is closed earlier than the second valve 52-2, and the second valve 52-2 is closed earlier than the third valve 52-3. This can prevent the ejection pressure from dropping at the downstream side.

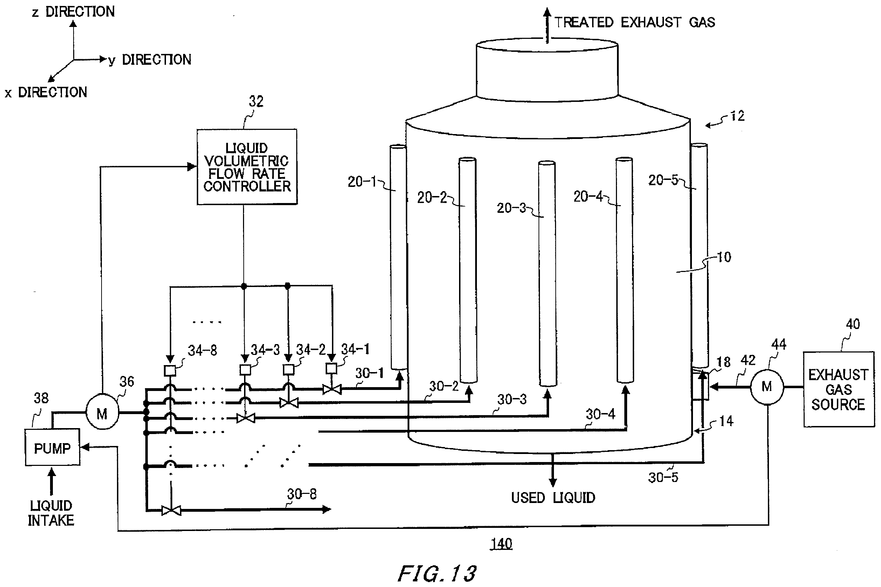

Fig. 13 shows an exhaust gas treating apparatus 140 relating to a fourth embodiment. In the exhaust gas treating apparatus 140 of the present example, a plurality of trunk tubes 20 are provided outside the reaction tower 10. In this regard, the exhaust gas treating apparatus 140 is different from the exhaust gas treating apparatus 100 of the first embodiment. In the present example, eight trunk tubes 20 are provided on the outer side surface of the reaction tower 10. Note that the number of the trunk tubes 20 is not limited to eight and can be any number equal to or larger than three. Three, four or five trunk tubes 20 may be provided.

As in the above-described examples, a plurality of nozzles 24 are provided as a plurality of ejectors on each trunk tube 20 in the present example. The nozzles 24 are respectively positioned on the trunk tubes 20 at different positions in the z direction as in Fig. 1. Note that Fig. 13 does not depict the inside of the reaction tower 10, differently from Fig. 1. Accordingly, Fig. 13 does not show the nozzles 24.

The liquid volumetric flow rate controller 32 controls whether to open or close valves 34-1 to 34-8 respectively provided in liquid inlet tubes 30-1 to 30-8. With such a configuration, the liquid volumetric flow rate controller 32 reduces the sum of the opening areas of the nozzles 24 used to eject the liquid as the volumetric flow rate of the liquid supplied to the trunk tubes 20 decreases. For example, the liquid volumetric flow rate controller 32 first closes the valve 34-1 if the volumetric flow rate of the liquid supplied to the trunk tubes 20 decreases. The liquid volumetric flow rate controller 32 next closes the valve 34-5 if the volumetric flow rate of the liquid supplied to the trunk tubes 20 further decreases.

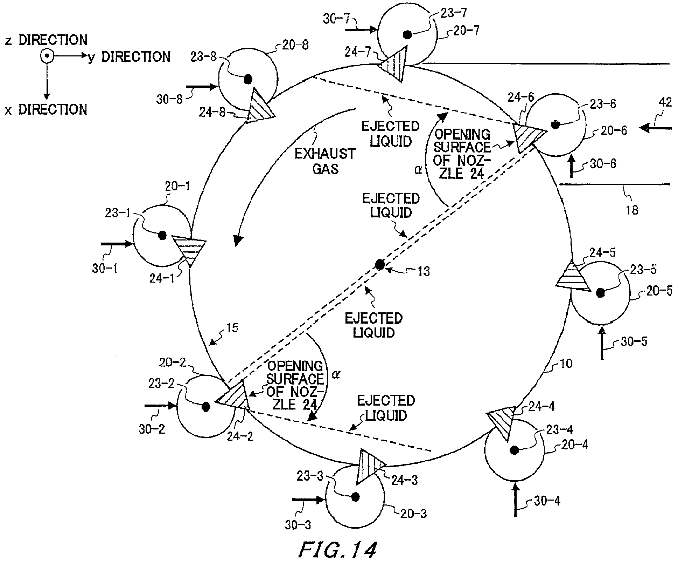

Fig. 14 shows a cross-section of the reaction tower 10 of the exhaust gas treating apparatus 140 along the x-y plane perpendicular to the z direction. In the present example, the trunk tubes 20 are equally arranged outside the reaction tower 10. To be specific, the trunk tubes 20 of the present example are arranged in such a manner that the central points 23 of any two adjacent ones of the trunk tubes 20 and the central point 13 of the reaction tower 10 form an angle of 45 degrees.

While the trunk tubes 20 are provided outside the reaction tower 10, the openings of the nozzles 24 are positioned inside the reaction tower 10. Specifically speaking, the openings of the nozzles 24 are positioned between the central point 13 of the reaction tower 10 and the inner side surface 15. In the present example, since eight trunk tubes 20 are provided, the ejection angle α of the nozzles 24 is accordingly set at 45 degrees. The ejection angle α is, however, not limited to 45 degrees. The ejection angle α may be any angle less than 90 degrees or changed according to the number of the trunk tubes 20.

In the present example, when the x-y cross-section of the reaction tower 10 is seen from above, the exhaust gas is introduced anti-clockwise. Therefore, the ejection angle α is configured to span clockwise from the line segment connecting the central point 23 of each trunk tube 20 and the central point 13 of the reaction tower 10 in the present example. In a case where the exhaust gas is introduced clockwise when the x-y cross-section of the reaction tower 10 is seen from above, however, the ejection angle α may be configured to span anti-clockwise from the line segment connecting the central point 23 and the central point 13.

With the above-described configuration, the liquid ejections from the nozzles 24 are less likely to collide with each other when compared with the case where the openings of the nozzles 24 of a pair of trunk tubes 20 that are oppositely arranged with respect to the central point 13 of the reaction tower 10 perfectly face each other. In addition, the liquid volumetric flow rate controller 32 controls the nozzles 24 in such a manner that the nozzles 24 of at least a pair of trunk tubes 20 that are oppositely arranged with respect to the central point 13 of the reaction tower 10 in the x-y plane may eject the liquid. In this way, the ejected liquid can cover substantially the entire x-y plane in the reaction tower 10. In the present example, the liquid volumetric flow rate controller 32 selects trunk tubes 20-2 and 20-6 as a pair of trunk tubes 20. Alternatively, the liquid volumetric flow rate controller 32 may select the trunk tubes 20-1 and 20-5, 20-3 and 20-7, or 20-4 and 20-8 as a pair of trunk tubes 20.

Furthermore, when the exhaust gas is introduced anti-clockwise, the ejection angle α is defined as an angle spanning clockwise from the line segment connecting the central point 23 and the central point 13. Accordingly, differently from the case where the ejection angle α is defined as an angle spanning anti-clockwise, the vector component of the liquid in the ejected direction and the vector component of the exhaust gas in the flowing direction can be prevented from cancelling each other. With such a configuration, the liquid ejection does not hinder the swirling of the exhaust gas within the reaction tower 10, or rather effectively facilitates the swirling of the exhaust gas.

The exhaust gas treating apparatuses disclosed herein can allow the exhaust gas to sufficiently swirl within the reaction tower 10 and thus efficiently remove the harmful substances contained in the exhaust gas. Accordingly, the exhaust gas treating apparatuses disclosed herein can have a compact size. If stricter rules are imposed for emission of harmful substances on ships and the like, a new exhaust gas treating apparatus may be installed in the existing equipment on the ships and the like, or the exhaust gas treating apparatus may be replaced. Since the exhaust gas treating apparatuses disclosed herein can easily achieve a compact size, the exhaust gas treating apparatuses can be easily installed in the existing equipment on the ships and the like.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 ··· reaction tower, 12 ··· top portion, 13 ··· central point, 14 ··· bottom portion, 15 ··· inner side surface, 16 ··· opening, 18 ··· exhaust gas inlet tube, 20 ··· trunk tube, 21 ··· outer side surface, 23 ··· central point, 24 ··· nozzle, 25 ··· shade, 26 ··· conical shape, 28 ··· axis, 29 ··· branch tube, 30 ··· liquid inlet tube, 32 ··· liquid volumetric flow rate controller, 34 ··· valve, 36 ··· liquid volumetric flow rate measuring unit, 38 ··· pump, 40 ··· exhaust gas source, 42 ··· exhaust gas, 44 ··· exhaust gas mass flow rate measuring unit, 50 ··· trunk tube, 52 ··· valve, 54 ··· valve, 69 ··· branch tube, 100 ··· exhaust gas treating apparatus, 120 ··· exhaust gas treating apparatus, 130 ··· exhaust gas treating apparatus, 140 ··· exhaust gas treating apparatus

## Claims

1. An exhaust gas treating apparatus (100) for treating an exhaust gas (42), comprising:
a reaction tower (10) into which the exhaust gas (42) is introduced;
a trunk tube (20) provided within the reaction tower (10), extending in a height direction of the reaction tower (10), and into which a liquid used to treat the exhaust gas (42) is supplied;
an exhaust gas inlet tube (18) connected to the reaction tower (10) to cause the exhaust gas (42) to swirl within the reaction tower (10);
a plurality of ejectors configured to eject the liquid supplied thereinto from the trunk tube (20) in a direction in which the exhaust gas (42) swirls;
a liquid inlet tube (30) configured to supply the liquid into the trunk tube (20);
**characterized by**
a volumetric flow rate regulating unit configured to change a sum of opening areas of the ejectors used to eject the liquid according to a change in a volumetric flow rate of the liquid supplied into the liquid inlet tube to regulate a pressure at which the liquid is ejected to fall within a predetermined range, wherein the sum of the opening areas of the ejectors used to eject the liquid is reduced according to a reduction in a volumetric flow rate of liquid supplied into the liquid inlet tube (30), wherein
the volumetric flow rate of the liquid supplied into the liquid inlet tube (30) changes according to a mass flow rate of the exhaust gas (42).

2. The exhaust gas treating apparatus (100) as set forth in Claim 1, comprising:
a plurality of the trunk tubes (20);
a plurality of the liquid inlet tubes (30) configured to supply the liquid respectively to the trunk tubes (20); and
a plurality of the volumetric flow rate regulating units respectively configured to regulate the volumetric flow rate of the liquid supplied into the liquid inlet tubes (30), wherein
the ejectors are provided in each of the trunk tubes (20), and
the sum of the opening areas of the ejectors used to eject the liquid is changeable according to the change in the volumetric flow rate of the liquid that flows through a liquid volumetric flow rate measuring unit (36) before branching into the liquid inlet tubes (30).

3. The exhaust gas treating apparatus (100) as set forth in Claim 2, comprising
a liquid volumetric flow rate controller (32) configured to control the sum of the opening areas of the ejectors by allowing or blocking the supply of the liquid into one or more of the trunk tubes (20), according to the change in the volumetric flow rate of the liquid supplied into the liquid inlet tubes (30).

4. The exhaust gas treating apparatus (100) as set forth in one of Claims 1 to 3, wherein
the ejectors each eject the liquid at a predetermined ejection angle within a horizontal plane perpendicular to the height direction of the reaction tower (10) that is directed from a bottom portion (14) of the reaction tower (10) through which the exhaust gas (42) is introduced to a top portion (12) of the reaction tower (10) through which the exhaust gas (42) is emitted, and
the ejection angle spans from a line connecting a central point (13) of the ejection angle and a central point (13) of the reaction tower (10) and has 90 degrees or larger.

5. The exhaust gas treating apparatus (100) as set forth in one of Claims 1 to 3, wherein
the trunk tube (20) includes a trunk tube volumetric flow rate regulating unit configured to regulate the volumetric flow rate of the liquid conveyed in the height direction of the reaction tower (10) that is directed from a bottom portion (14) of the reaction tower (10) through which the exhaust gas (42) is introduced to a top portion (12) of the reaction tower (10) through which the exhaust gas (42) is emitted or in a direction opposite to the height direction.

6. An exhaust gas treating apparatus (100) for treating an exhaust gas (42) according to claim 1, wherein
the trunk tube (20) includes a plurality of trunk tube volumetric flow rate regulating units, and the trunk tube volumetric flow rate regulating units are:
configured to regulate the volumetric flow rate of the liquid conveyed in a height direction of the reaction tower (10) that is directed from a bottom portion (14) of the reaction tower (10) through which the exhaust gas (42) is introduced to a top portion (12) of the reaction tower (10) through which the exhaust gas (42) is emitted; and
positioned at different positions in the height direction,
the liquid is supplied into the trunk tube (20) to be conveyed from the bottom portion (14) to the top portion (12), and
the trunk tube volumetric flow rate regulating units are used in an order from the top portion (12) to the bottom portion (14) to block the liquid according to reduction in the volumetric flow rate of the liquid supplied into the trunk tube (20).

7. The exhaust gas treating apparatus (100) as set forth in Claim 5, wherein
the trunk tube (20) includes a plurality of trunk tube volumetric flow rate regulating units positioned at different positions in the height direction,
the liquid is supplied into the trunk tube (20) to be conveyed from the top portion (12) to the bottom portion (14),
the trunk tube volumetric flow rate regulating units are used in an order from the bottom portion (14) to the top portion (12) to block the liquid according to reduction in the volumetric flow rate of the liquid supplied into the trunk tube (20).

8. The exhaust gas treating apparatus (100) as set forth in one of Claims 6 and 7, wherein
a cross-sectional area of the trunk tube (20) in a horizontal plane perpendicular to the height direction is larger at an upstream side of the liquid than at a downstream side.

9. The exhaust gas treating apparatus (100) as set forth in one of Claims 5 to 8, further comprising
a plurality of branch tubes (29) positioned at different positions in the height direction of the reaction tower (10) that is directed from a bottom portion (14) of the reaction tower (10) through which the exhaust gas (42) is introduced to a top portion (12) of the reaction tower (10) through which the exhaust gas (42) is emitted, the branch tubes (29) extending from an outer side surface (21) of the trunk tube (20) toward an inner side surface (15) of the reaction tower (10), and
cross-sectional areas of the branch tubes (29) are larger at an upstream side of the liquid than at a downstream side.

10. The exhaust gas treating apparatus (100) as set forth in one of Claims 5 to 8, further comprising
a plurality of branch tubes (29) positioned at different positions in the height direction of the reaction tower (10) that is directed from a bottom portion (14) of the reaction tower (10) through which the exhaust gas (42) is introduced to a top portion (12) of the reaction tower (10) through which the exhaust gas (42) is emitted, the branch tubes (29) extending from an outer side surface (21) of the trunk tube (20) toward an inner side surface (15) of the reaction tower (10), wherein
the ejectors are provided on each of the branch tubes (29) and positioned at different positions in a direction in which the each branch tube (29) extends, and
the exhaust gas treating apparatus (100) further comprises a first branch-tube volumetric flow rate regulating unit between at least two ejectors provided on each of the branch tubes (29), the first branch-tube volumetric flow rate regulating unit configured to regulate the volumetric flow rate of the liquid conveyed in the direction in which the each branch tube (29) extends.

11. The exhaust gas treating apparatus (100) as set forth in Claim 10, further comprising
a second branch-tube volumetric flow rate regulating unit between the trunk tube (20) and one of the at least two ejectors that is closer or closest to the trunk tube (20), the second branch-tube volumetric flow rate regulating unit configured to regulate the volumetric flow rate of the liquid conveyed in the direction in which the each branch tube (29) extends, wherein
the first branch-tube volumetric flow rate regulating unit and the second branch-tube volumetric flow rate regulating unit are used in an order of the first branch-tube volumetric flow rate regulating unit and the second branch-tube volumetric flow rate regulating unit to block the liquid according to reduction in the liquid supplied into the trunk tube (20).

12. An exhaust gas treating apparatus (100) for treating an exhaust gas (42), comprising:
a reaction tower (10) into which the exhaust gas (42) is introduced;
a plurality of trunk tubes (20) provided outside the reaction tower (10), extending in a height direction of the reaction tower (10), and into which a liquid to treat the exhaust gas (42) is supplied;
a plurality of ejectors provided in each of the trunk tubes (20), the ejectors configured to eject the liquid supplied thereinto from each of the trunk tubes (20) in a direction in which the exhaust gas (42) swirls;
an exhaust gas inlet tube (18) connected to the reaction tower (10) to cause the exhaust gas (42) to swirl within the reaction tower (10);
a plurality of liquid inlet tubes (30) configured to supply the liquid respectively to the trunk tubes (20);
**characterized by**
a plurality of volumetric flow rate regulating units configured to change a sum of opening areas of the ejectors used to eject the liquid according to a change in a volumetric flow rate of the liquid supplied into the liquid inlet tubes (30) to regulate a pressure at which the liquid is ejected to fall within a predetermined range, wherein the sum of the opening areas of the ejectors used to eject the liquid is reduced according to a reduction in a volumetric flow rate of liquid supplied into the liquid inlet tube, wherein
the volumetric flow rate of the liquid supplied into the liquid inlet tubes (30) changes according to a mass flow rate of the exhaust gas (42).

13. The exhaust gas treating apparatus (100) as set forth in Claim 12, further comprising
a liquid volumetric flow rate controller (32) configured to control the volumetric flow rate of the liquid supplied into the trunk tubes (20), wherein
the liquid volumetric flow rate controller (32) causes the ejectors, to eject the liquid, that are provided in at least a pair of trunk tubes (20) that are arranged oppositely with respect to a central point (23) of the reactor tower in a horizontal plane perpendicular to the height direction of the reaction tower (10) that is directed from a bottom portion (14) of the reaction tower (10) through which the exhaust gas (42) is introduced to a top portion (12) of the reaction tower (10) through which the exhaust gas (42) is emitted.

## Patentansprüche

1. Abgasbehandlungsvorrichtung (100) zum Behandeln eines Abgases (42), umfassend:
einen Reaktionsturm (10), in den das Abgas (42) eingeleitet wird;
ein innerhalb des Reaktionsturms (10) vorgesehenes Schachtrohr (20), das sich in einer Höhenrichtung des Reaktionsturms (10) erstreckt und in das eine zur Behandlung des Abgases (42) verwendete Flüssigkeit zugeführt wird;
ein Abgaseinlassrohr (18), das mit dem Reaktionsturm (10) verbunden ist, um zu bewirken, dass das Abgas (42) innerhalb des Reaktionsturms (10) verwirbelt wird;
mehrere Ejektoren, die konfiguriert sind, die in sie zugeführte Flüssigkeit aus dem Schachtrohr (20) in einer Richtung auszustoßen, in der das Abgas (42) verwirbelt wird;
ein Flüssigkeitseinlassrohr (30), das konfiguriert ist, die Flüssigkeit in das Schachtrohr (20) zuzuführen;
**gekennzeichnet durch**
eine Volumenstromregeleinheit, die konfiguriert ist, eine Summe von Öffnungsflächen der Ejektoren, die zum Ausstoßen der Flüssigkeit verwendet werden, gemäß einer Änderung in einem Volumenstrom der Flüssigkeit, die in das Flüssigkeitseinlassrohr zugeführt wird, zu ändern, um einen Druck, mit dem die Flüssigkeit ausgestoßen wird, zu regeln, sodass er in einen vorbestimmten Bereich fällt, wobei die Summe der Öffnungsflächen der Ejektoren, die zum Ausstoßen der Flüssigkeit verwendet werden, entsprechend einer Reduzierung in einem Volumenstrom der Flüssigkeit, die in das Flüssigkeitseinlassrohr (30) zugeführt wird, reduziert wird, wobei
sich der Volumenstrom der in das Flüssigkeitseinlassrohr (30) zugeführten Flüssigkeit gemäß einem Massenstrom des Abgases (42) ändert.

2. Abgasbehandlungsvorrichtung (100) nach Anspruch 1, umfassend:
mehrere Schachtrohre (20);
mehrere der Flüssigkeitseinlassrohre (30), die konfiguriert sind, die Flüssigkeit den Schachtrohren (20) entsprechend zuzuführen; und
mehrere der Volumenstromregeleinheiten, die konfiguriert sind, den Volumenstrom der in die Flüssigkeitseinlassrohre (30) zugeführten Flüssigkeit zu regeln, wobei
die Ejektoren in jedem der Schachtrohre (20) vorgesehen sind, und
die Summe der Öffnungsflächen der Ejektoren, die zum Ausstoßen der Flüssigkeit verwendet werden, gemäß der Änderung des Volumenstroms der Flüssigkeit veränderbar ist, die durch die Flüssigkeitsvolumenstrommesseinheit (36) fließt, bevor sie sich in die Flüssigkeitseinlassrohre (30) verzweigt.

3. Abgasbehandlungsvorrichtung (100) nach Anspruch 2, umfassend
einen Flüssigkeitsvolumenstromregler (32), der konfiguriert ist, die Summe der Öffnungsflächen der Ejektoren zu steuern, indem er die Zufuhr der Flüssigkeit in eines oder mehrere der Schachtrohre (20) gemäß der Änderung im Volumenstrom der in die Flüssigkeitseinlassrohre (30) zugeführten Flüssigkeit zulässt oder blockiert.

4. Abgasbehandlungsvorrichtung (100) nach einem der Ansprüche 1 bis 3, wobei
die Ejektoren die Flüssigkeit jeweils unter einem vorbestimmten Ausstoßwinkel innerhalb einer horizontalen Ebene senkrecht zur Höhenrichtung des Reaktionsturms (10) ausstoßen, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, gerichtet ist, und
sich der Ausstoßwinkel von einer Linie, die einen Mittelpunkt (13) des Ausstoßwinkels und einen Mittelpunkt (13) des Reaktionsturms (10) verbindet, erstreckt und 90 Grad oder größer aufweist.

5. Abgasbehandlungsvorrichtung (100) nach einem der Ansprüche 1 bis 3, wobei
das Schachtrohr (20) eine Schachtrohrvolumenstromregeleinheit umfasst, die konfiguriert ist, den Volumenstrom der Flüssigkeit zu regeln, die in der Höhenrichtung des Reaktionsturms (10) gefördert wird, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, oder in einer der Höhenrichtung entgegengesetzten Richtung gerichtet ist.

6. Abgasbehandlungsvorrichtung (100) zum Behandeln eines Abgases (42) nach Anspruch 1, wobei
das Schachtrohr (20) mehrere Schachtrohrvolumenstromregeleinheiten umfasst und die Schachtrohrvolumenstromregeleinheiten:
konfiguriert sind, den Volumenstrom der in einer Höhenrichtung des Reaktionsturms (10) geförderten Flüssigkeit zu regeln, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, gerichtet ist; und
an verschiedenen Positionen in der Höhenrichtung positioniert sind,
wobei die Flüssigkeit in das Schachtrohr (20) zugeführt wird, sodass sie vom unteren Abschnitt (14) zum oberen Abschnitt (12) befördert wird, und
die Schachtrohrvolumenstromregeleinheiten in einer Reihenfolge vom oberen Abschnitt (12) zum unteren Abschnitt (14) verwendet werden, um die Flüssigkeit entsprechend einer Reduzierung im Volumenstrom der in das Schachtrohr (20) zugeführten Flüssigkeit zu blockieren.

7. Abgasbehandlungsvorrichtung (100) nach Anspruch 5, wobei
das Schachtrohr (20) mehrere Schachtrohrvolumenstromregeleinheiten umfasst, die an verschiedenen Positionen in der Höhenrichtung angeordnet sind,
die Flüssigkeit in das Schachtrohr (20) zugeführt wird, sodass sie vom oberen Abschnitt (12) zum unteren Abschnitt (14) befördert wird,
die Schachtrohrvolumenstromregeleinheiten in einer Reihenfolge vom unteren Abschnitt (12) zum oberen Abschnitt (14) verwendet werden, um die Flüssigkeit entsprechend einer Reduzierung im Volumenstrom der in das Schachtrohr (20) zugeführten Flüssigkeit zu blockieren.

8. Abgasbehandlungsvorrichtung (100) nach einem der Ansprüche 6 und 7, wobei
eine Querschnittsfläche des Schachtrohrs (20) in einer horizontalen Ebene senkrecht zur Höhenrichtung an einer stromaufwärtigen Seite der Flüssigkeit größer ist als an einer stromabwärtigen Seite.

9. Abgasbehandlungsvorrichtung (100) nach einem der Ansprüche 5 bis 8, ferner umfassend
mehrere Zweigrohre (29), die an verschiedenen Positionen in der Höhenrichtung des Reaktionsturms (10) angeordnet sind, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, gerichtet ist, wobei sich die Zweigrohre (29) von einer äußeren Seitenfläche (21) des Schachtrohrs (20) in Richtung einer inneren Seitenfläche (15) des Reaktionsturms (10) erstrecken und
Querschnittsflächen der Abzweigrohre (29) an einer stromaufwärtigen Seite der Flüssigkeit größer sind als an einer stromabwärtigen Seite.

10. Abgasbehandlungsvorrichtung (100) nach einem der Ansprüche 5 bis 8, ferner umfassend
mehrere Zweigrohre (29), die an verschiedenen Positionen in der Höhenrichtung des Reaktionsturms (10) angeordnet sind, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, gerichtet ist, wobei sich die Zweigrohre (29) von einer äußeren Seitenfläche (21) des Schachtrohrs (20) in Richtung einer inneren Seitenfläche (15) des Reaktionsturms (10) erstrecken, wobei
die Ejektoren an jedem der Zweigrohre (29) vorgesehen und an verschiedenen Positionen in einer Richtung angeordnet sind, in der sich jedes Zweigrohr (29) erstreckt, und
die Abgasbehandlungsvorrichtung (100) ferner eine erste Zweigrohrvolumenstromregeleinheit zwischen mindestens zwei Ejektoren umfasst, die an jedem der Zweigrohre (29) vorgesehen sind, wobei die erste Zweigrohrvolumenstromregeleinheit konfiguriert ist, den Volumenstrom der Flüssigkeit zu regeln, die in der Richtung befördert wird, in der sich das jeweilige Zweigrohr (29) erstreckt.

11. Abgasbehandlungsvorrichtung (100) nach Anspruch 10, ferner umfassend
eine zweite Zweigrohrvolumenstromregeleinheit zwischen dem Schachtrohr (20) und einem der mindestens zwei Ejektoren, der sich näher oder am nahesten an dem Schachtrohr (20) befindet, wobei die zweite Zweigrohrvolumenstromregeleinheit konfiguriert ist, den Volumenstrom der Flüssigkeit, die in der Richtung befördert wird, in der sich jedes Zweigrohr (29) erstreckt, zu regeln, wobei
die erste Zweigrohrvolumenstromregeleinheit und die zweite Zweigrohrvolumenstromregeleinheit in einer Reihenfolge der ersten Zweigrohrvolumenstromregeleinheit und der zweiten Zweigrohrvolumenstromregeleinheit verwendet werden, um die Flüssigkeit gemäß der Reduzierung der in das Schachtrohr (20) zugeführten Flüssigkeit zu blockieren.

12. Abgasbehandlungsvorrichtung (100) zum Behandeln eines Abgases (42), umfassend:
einen Reaktionsturm (10), in den das Abgas (42) eingeleitet wird;
mehrere Schachtrohre (20), die außerhalb des Reaktionsturms (10) vorgesehen sind, die sich in einer Höhenrichtung des Reaktionsturms (10) erstrecken und in die eine Flüssigkeit zur Behandlung des Abgases (42) zugeführt wird;
mehrere Ejektoren, die in jedem der Schachtrohre (20) vorgesehen sind, wobei die Ejektoren konfiguriert sind, die in sie zugeführte Flüssigkeit von jedem der Schachtrohre (20) in einer Richtung auszustoßen, in der das Abgas (42) verwirbelt wird;
ein Abgaseinlassrohr (18), das mit dem Reaktionsturm (10) verbunden ist, um zu bewirken, dass das Abgas (42) innerhalb des Reaktionsturms (10) verwirbelt wird;
mehrere Flüssigkeitseinlassrohre (30), die konfiguriert sind, die Flüssigkeit den Schachtrohren (20) entsprechend zuzuführen;
**gekennzeichnet durch**
mehrere Volumenstromregeleinheiten, die konfiguriert sind, eine Summe von Öffnungsflächen der Ejektoren, die zum Ausstoßen der Flüssigkeit verwendet werden, entsprechend einer Änderung in einem Volumenstrom der Flüssigkeit, die in die Flüssigkeitseinlassrohre (30) zugeführt wird, zu ändern, um einen Druck, mit dem die Flüssigkeit ausgestoßen wird, zu regeln, sodass er in einen vorbestimmten Bereich fällt, wobei die Summe der Öffnungsflächen der Ejektoren, die zum Ausstoßen der Flüssigkeit verwendet werden, entsprechend einer Reduzierung in einem Volumenstrom der in das Flüssigkeitseinlassrohr zugeführten Flüssigkeit reduziert wird, wobei
sich der Volumenstrom der in die Flüssigkeitseinlassrohre (30) zugeführten Flüssigkeit gemäß einem Massenstrom des Abgases (42) ändert.

13. Abgasbehandlungsvorrichtung (100) nach Anspruch 12, ferner umfassend
einen Flüssigkeitsvolumenstromregler (32), der konfiguriert ist, den Volumenstrom der in die Schachtrohre (20) zugeführten Flüssigkeit zu regeln, wobei
der Flüssigkeitsvolumenstromregler (32) bewirkt, dass die Ejektoren die Flüssigkeit ausstoßen, die in mindestens einem Paar von Schachtrohren (20) vorgesehen sind, die gegenüberliegend in Bezug auf einen zentralen Punkt (23) des Reaktionsturms in einer horizontalen Ebene senkrecht zur Höhenrichtung des Reaktionsturms (10) angeordnet sind, die von einem unteren Abschnitt (14) des Reaktionsturms (10), durch den das Abgas (42) eingeleitet wird, zu einem oberen Abschnitt (12) des Reaktionsturms (10), durch den das Abgas (42) ausgestoßen wird, gerichtet ist.

## Revendications

1. Appareil de traitement de gaz d'échappement (100) pour traiter un gaz d'échappement (42), comprenant:
une colonne de réaction (10) dans laquelle le gaz d'échappement (42) est introduit;
un tube formant tronc (20) fourni dans la colonne de réaction (10) s'étendant dans une direction en hauteur de la colonne de réaction (10) et qui est alimenté par un liquide utilisé pour traiter le gaz d'échappement (42) ;
un tube d'entrée de gaz d'échappement (18) raccordé à la colonne de réaction (10) pour faire tourbillonner le gaz d'échappement (42) dans la colonne de réaction (10);
une pluralité d'éjecteurs configurés pour éjecter le liquide fourni dans ceux-ci à partir du tube formant tronc (20) dans une direction dans laquelle le gaz d'échappement (42) tourbillonne;
un tube d'entrée de liquide (30) configuré pour alimenter avec le liquide le tube formant tronc (20);
**caractérisé par**
une unité de régulation de débit volumétrique, configurée pour modifier une somme d'aires d'ouverture des éjecteurs utilisés pour éjecter le liquide en fonction d'un changement de débit volumétrique du liquide qui alimente le tube d'entrée de liquide pour réguler une pression à laquelle le liquide est éjecté afin de tomber dans les limites d'une plage prédéterminée, dans lequel la somme des aires d'ouverture des éjecteurs utilisés pour éjecter le liquide est réduite en fonction d'une réduction d'un débit volumétrique de liquide qui alimente le tube d'entrée de liquide (30), dans lequel
le débit volumétrique du liquide qui alimente le tube d'entrée de liquide (30) change en fonction d'un débit massique du gaz d'échappement (42).

2. Appareil de traitement de gaz d'échappement (100) tel qu'exposé dans la revendication 1, comprenant:
une pluralité de tubes formant tronc (20);
une pluralité des tubes d'entrée de liquide (30) configurés pour alimenter, avec le liquide, respectivement les tubes formant tronc (20); et
une pluralité des unités de régulation de débit volumétrique respectivement configurées pour réguler un débit volumétrique du liquide qui alimente les tubes d'entrée de liquide (30), dans lequel
les éjecteurs sont fournis dans chacun des tubes formant tronc (20), et
la somme des aires d'ouverture des éjecteurs utilisés pour éjecter le liquide peut être modifiée en fonction du changement de débit volumétrique du liquide qui s'écoule à travers une unité de mesure de débit volumétrique de liquide (36) avant la ramification en les tubes d'entrée de liquide (30).

3. Appareil de traitement de gaz d'échappement (100) tel qu'exposé dans la revendication 2, comprenant un contrôleur de débit volumétrique de liquide (32) configuré pour contrôler la somme des aires d'ouverture des éjecteurs en permettant ou bloquant l'alimentation en liquide de ce ou ces tubes formant tronc (20) en fonction du changement de débit volumétrique du liquide qui alimente les tubes d'entrée de liquide (30).

4. Appareil de traitement de gaz d'échappement (100) tel qu'exposé dans l'une des revendications 1 à 3, dans lequel
les éjecteurs éjectent chacun le liquide selon un angle d'éjection prédéterminé dans un plan horizontal perpendiculaire à la direction en hauteur de la colonne de réaction (10) qui est orientée d'une partie inférieure (14) de la colonne de réaction (10) à travers laquelle le gaz d'échappement (42) est introduit vers une partie supérieure (12) de la colonne de réaction (10) à travers laquelle le gaz d'échappement (42) est émis, et
l'angle d'éjection s'étend d'une ligne reliant un point central (13) de l'angle d'éjection et un point central (13) de la colonne de réaction (10) et a 90 degrés ou plus.

5. Appareil de traitement de gaz d'échappement (100) tel qu'exposé dans l'une des revendications 1 à 3, dans lequel
le tube formant tronc (20) comprend une unité de régulation de débit volumétrique de tube formant tronc, configurée pour réguler le débit volumétrique du liquide transporté dans la direction en hauteur de la colonne de réaction (10) qui est orientée d'une partie inférieure (14) de la colonne de réaction (10) à travers laquelle le gaz d'échappement (42) est introduit vers une partie supérieure (12) de la colonne de réaction (10) à travers laquelle le gaz d'échappement (42) est émis, ou dans une direction opposée à la direction en hauteur.

6. Appareil de traitement de gaz d'échappement (100) pour traiter un gaz d'échappement (42) selon la revendication 1, dans lequel
le tube formant tronc (20) comprend une pluralité d'unités de régulation de débit volumétrique de tube formant tronc, et les unités de régulation de débit volumétrique de tube formant tronc sont:
configurées pour réguler le débit volumétrique du liquide transporté dans une direction en hauteur de la colonne de réaction (10) qui est orientée d'une partie inférieure (14) de la colonne de réaction (10) à travers laquelle le gaz d'échappement (42) est introduit vers une partie supérieure (12) de la colonne de réaction (10) à travers laquelle le gaz d'échappement (42) est émis; et
positionnées dans différentes positions dans la direction en hauteur,
le liquide alimente le tube formant tronc (20) pour être transporté de la partie inférieure (14) vers la partie supérieure (12), et
les unités de régulation de débit volumétrique de tube formant tronc sont utilisées dans un ordre depuis la partie inférieure (12) jusqu'à la partie supérieure (14) pour bloquer le liquide en fonction de la réduction du débit volumétrique du liquide qui alimente le tube formant tronc (20).

7. Appareil de traitement de gaz d'échappement (100) tel qu'exposé dans la revendication 5, dans lequel le tube formant tronc (20) comprend une pluralité d'unités de régulation de débit volumétrique de tube formant tronc, positionnées dans différentes positions dans la direction en hauteur,
le liquide alimente le tube formant tronc (20) pour être transporté de la partie supérieure (12) vers la partie inférieure (14),
les unités de régulation de débit volumétrique de tube formant tronc sont utilisées dans un ordre depuis la partie inférieure (14) jusqu'à la partie supérieure (12) pour bloquer le liquide en fonction d'une réduction du débit volumétrique du liquide qui alimente le tube formant tronc (20).

8. Appareil de traitement de gaz d'échappement (100) tel qu'exposé dans l'une des revendications 6 et 7, dans lequel
une aire de section transversale du tube formant tronc (20) dans un plan horizontal perpendiculaire à la direction en hauteur est plus grande d'un côté amont du liquide que d'un côté aval.

9. Appareil de traitement de gaz d'échappement (100) tel qu'exposé dans l'une des revendications 5 à 8, comprenant en outre
une pluralité de tubes de ramification (29) positionnés dans différentes positions dans la direction en hauteur de la colonne de réaction (10) qui est orientée d'une partie inférieure (14) de la colonne de réaction (10) à travers laquelle le gaz d'échappement (42) est introduit à une partie supérieure (12) de la colonne de réaction (10) à travers laquelle le gaz d'échappement (42) est émis, les tubes de ramification (29) s'étendant à partir d'une surface de côté extérieur (21) du tube formant tronc (20) jusqu'à une surface de côté intérieur (15) de la colonne de réaction (10), et
des aires de section transversale des tubes de ramification (29) sont plus grandes d'un côté amont du liquide que d'un côté aval.

10. Appareil de traitement de gaz d'échappement (100) tel qu'exposé dans l'une des revendications 5 à 8, comprenant en outre
une pluralité de tubes de ramification (29) positionnés dans différentes positions dans la direction en hauteur de la colonne de réaction (10) qui est orientée d'une partie inférieure (14) de la colonne de réaction (10) à travers laquelle le gaz d'échappement (42) est introduit à une partie supérieure (12) de la colonne de réaction (10) à travers laquelle le gaz d'échappement (42) est émis, les tubes de ramification (29) s'étendant à partir d'une surface de côté extérieur (21) du tube formant tronc (20) jusqu'à une surface de côté intérieur (15) de la colonne de réaction (10), dans lequel les éjecteurs sont fournis sur chacun des tubes de ramification (29) et positionnés dans différentes positions dans une direction dans laquelle chaque tube de ramification (29) s'étend, et
l'appareil de traitement de gaz d'échappement (100) comprend en outre une première unité de régulation de débit volumétrique de tube de ramification entre au moins deux éjecteurs fournis sur chacun des tubes de ramification (29), la première unité de régulation de débit volumétrique de tube de ramification étant configurée pour réguler le débit volumétrique du liquide transporté dans la direction dans laquelle chaque tube de ramification (29) s'étend.

11. Appareil de traitement de gaz d'échappement (100) tel qu'exposé dans la revendication 10, comprenant en outre
une deuxième unité de régulation de débit volumétrique de tube de ramification entre le tube formant tronc (20) et l'un des au moins deux éjecteurs qui est plus près ou le plus proche du tube formant tronc (20), la deuxième unité de régulation de débit volumétrique de tube de ramification étant configurée pour réguler le débit volumétrique du liquide transporté dans la direction dans laquelle chaque tube de ramification (29) s'étend, dans lequel
la première unité de régulation de débit volumétrique de tube de ramification et la deuxième unité de régulation de débit volumétrique de tube de ramification sont utilisées dans un ordre de la première unité de régulation de débit volumétrique de tube de ramification et la deuxième unité de régulation de débit volumétrique de tube de ramification pour bloquer le liquide en fonction de la réduction en liquide qui alimente le tube formant tronc (20).

12. Appareil de traitement de gaz d'échappement (100) pour traiter un gaz d'échappement (42), comprenant:
une colonne de réaction (10) dans laquelle le gaz d'échappement (42) est introduit;
une pluralité de tubes formant tronc (20), fournis à l'extérieur de la colonne de réaction (10), s'étendant dans une direction en hauteur de la colonne de réaction (10), et qui sont alimentés par un liquide pour traiter le gaz d'échappement (42);
une pluralité d'éjecteurs fournis dans chacun des tubes formant tronc (20), les éjecteurs étant configurés pour éjecter le liquide qui les alimente à partir de chacun des tubes formant tronc (20) dans une direction dans laquelle le gaz d'échappement (42) tourbillonne;
un tube d'entrée de gaz d'échappement (18) raccordé à la colonne de réaction (10) pour faire tourbillonner le gaz d'échappement (42) dans la colonne de réaction (10);
une pluralité de tubes d'entrée de liquide (30) configurés pour alimenter avec le liquide respectivement les tubes formant tronc (20);
**caractérisé par**
une pluralité d'unités de régulation de débit volumétrique configurées pour modifier une somme d'aires d'ouverture des éjecteurs utilisés pour éjecter le liquide en fonction d'un changement de débit volumétrique du liquide qui alimente les tubes d'entrée de liquide (30) pour réguler une pression à laquelle le liquide est éjecté afin de tomber dans les limites d'une plage prédéterminée, dans lequel la somme des aires d'ouverture des éjecteurs utilisés pour éjecter le liquide est réduite en fonction d'une réduction d'un débit volumétrique de liquide qui alimente le tube d'entrée de liquide, dans lequel
le débit volumétrique du liquide qui alimente les tubes d'entrée de liquide (30) change en fonction d'un débit massique du gaz d'échappement (42).

13. Appareil de traitement de gaz d'échappement (100) tel qu'exposé dans la revendication 12, comprenant en outre un contrôleur de débit volumétrique de liquide (32) configuré pour contrôler le débit volumétrique du liquide qui alimente les tubes formant tronc (20), dans lequel
le contrôleur de débit volumétrique de liquide (32) fait que les éjecteurs éjectent le liquide, lesquels sont fournis dans au moins une paire de tubes formant tronc (20) qui sont disposés de manière opposée par rapport à un point central (23) de la colonne de réaction dans un plan horizontal perpendiculaire à la direction en hauteur de la colonne de réaction (10) qui est orientée d'une partie inférieure (14) de la colonne de réaction (10) à travers laquelle le gaz d'échappement (42) est introduit vers une partie supérieure (12) de la colonne de réaction (10) à travers laquelle le gaz d'échappement (42) est émis.
